# EUROPEAN PATENT SPECIFICATION

(11) **EP 3 598 660 B1**
(45) Date of publication and mention of the grant of the patent: **25.08.2021**
(21) Application number: 17908593.1
(22) Date of filing: 04.05.2017
(51) Int. Cl.: H04B 7/06, H04B 7/0413, H04L 5/00, H04J 13/00, H04L 25/02, H04L 27/26

(54) **METHOD AND TERMINAL DEVICE FOR TRANSMITTING REFERENCE SIGNAL**
VERFAHREN UND ENDGERÄTVORRICHTUNG ZUR ÜBERTRAGUNG VON REFERENZSIGNALEN
PROCÉDÉ ET DISPOSITIF TERMINAL POUR ÉMETTRE UN SIGNAL DE RÉFÉRENCE

(43) Date of publication of application: 22.01.2020
(73) Proprietor: Huawei Technologies Co., Ltd., Longgang District Shenzhen, Guangdong 518129 (CN)
(72) Inventor: GAO, Lei, Shenzhen Guangdong 518129 (CN)
(74) Representative: Gill Jennings & Every LLP
(86) International application number: PCT/CN2017/083108
(87) International publication number: WO 2018/201413

(56) References cited:
- WO-A1-2017/065825
- CN-A- 101 444 054
- CN-A- 102 281 086
- CN-A- 104 885 554
- US-A1- 2016 269 157
- HUAWEI ET AL: "Discussion on supporting Transmit Diversity for R15 sidelink", 3GPP DRAFT; R1-1704278, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051242430, Retrieved from the Internet: URL:http://www.3gpp.org/ftp/Meetings_3GPP_ SYNC/RAN1/Docs/ [retrieved on 2017-04-02]

## Description

### TECHNICAL FIELD

This application relates to the communications field, and more specifically, to a reference signal transmission method and a terminal device.

### BACKGROUND

In recent years, an Internet of Vehicles technology has attracted widespread attention. An Internet of Vehicles system improves safety, reliability, and efficiency of road traffic through communication between vehicles and vehicles, between vehicles and traffic facilities, and between vehicles and pedestrians. The Internet of Vehicles system includes vehicle-to-vehicle (Vehicle-to-Vehicle, V2V) communication, vehicle-to-infrastructure (Vehicle-to-Infrastructure, V2I) communication, vehicle-to-pedestrian (Vehicle-to-Pedestrian, V2P) communication, vehicle-to-network (Vehicle-to-Network, V2N) communication, and the like. To ensure safe driving of vehicles, periodic exchange of status information and a periodic status message (Periodic Status Message, PSM) are required between user equipments (User Equipment, UE) in the Internet of Vehicles system. The PSM may be understood as a "heartbeat packet" of a vehicle, including information about the vehicle, such as a location, a speed, a status, and the PSM is broadcast to surrounding vehicles. A potential danger may be determined by analyzing received PSMs of surrounding vehicles, and then a warning may be given, thereby reducing disasters.

In Rel-14, 3GPP standardizes a resource selection manner for Rel-14 UE in the Internet of Vehicles system. In a mode in which the Rel-14 UE independently selects a resource, a substep of selecting a transmit resource by the UE is that the Rel-14 UE excludes a reserved time-frequency resource by decoding scheduling assignment (Scheduling Assignment, SA) information and measuring reference signal received power (Reference Signal Received Power, RSRP). Specifically, the Rel-14 UE obtains a pilot root sequence and a cyclic time shift of each pilot location by decoding the SA, and measures RSRP for data transmission based on the obtained pilot root sequence and cyclic time shift. The Rel-14 UE excludes an overlapping resource from a selectable resource set based on a measurement result.

Currently, 3GPP is discussing evolution of a Rel-15 Internet of Vehicles system, and one of evolution goals is to discuss feasibility and a gain of adding a transmit diversity feature to Rel-15 UE under the premise that the Rel-15 UE and the Rel-14 UE share a resource pool without seriously affecting performance of the Rel-14 UE. Currently, a pilot transmission method has been proposed for a physical sidelink shared channel (Physical Sidelink Shared Channel, PSSCH) channel to implement transmit diversity by using a plurality of antenna ports. However, in this method, because a pilot sequence constructed based on a Rel-14 generation rule is transmitted on only one antenna port, the Rel-14 UE can identify only the pilot sequence constructed based on the Rel-14 generation rule and cannot identify a pilot sequence transmitted on another antenna port. Consequently, time-frequency resource occupancy on another antenna port cannot be learned. US 2016/269157 A1 discloses a method involving using channel state information obtained from an uplink sounding signal in non-orthogonal or orthogonal applications to beamform downlink messages to targeted recipients. HUAWEI ET AL. "Discussion on supporting Transmit Diversity for R15 sidelink", 3GPP TSG RAN WG1 Meeting #88bis, r1-1704278, discloses Transmit Diversity schemes in terms with reference to their impacts to R-14 user equipment.

### SUMMARY

Embodiments of this application provide a reference signal transmission method and a terminal device, so as to obtain time-frequency resource occupancy on each antenna port.

According to a first aspect, a reference signal transmission method is provided, including:
obtaining, by a first terminal device, a first reference signal set and a second reference signal set, where the first terminal device includes n antenna ports, and n is a natural number greater than 1;
sending, by the first terminal device, a first reference signal on a first time-frequency resource of an i^{th} antenna port, where the i^{th} antenna port is any one of the n antenna ports, the first time-frequency resource is included in at least one preset time-frequency resource used to send the first reference signal set and the second reference signal set, and the first reference signal is a reference signal in the first reference signal set;
sending, by the first terminal device, a second reference signal on the first time-frequency resource of a j^{th} antenna port, where the j^{th} antenna port is one of other antenna ports than the i^{th} antenna port in the n antenna ports, the second reference signal is a reference signal in the second reference signal set, and the second reference signal is different from the first reference signal; and
sending, by the first terminal device on each of the n antenna ports, at least one reference signal in the first reference signal set. The first reference signal is an LTE-A Rel-14, i.e. old pilot sequence and the second reference signal is different from the LTE-A Rel-14 pilot sequence.

In this embodiment of this application, the first terminal device may send the first reference signal through broadcast, and the first reference signal may be received by all terminal devices; or the first reference signal may be sent to a terminal device.

Optionally, the first terminal device sends, on the first time-frequency resource of the i^{th} antenna port, the first reference signal to a second terminal device.

Similarly, in this embodiment of this application, the first terminal device may send the second reference signal through broadcast, and the second reference signal may be received by all terminal devices; or the second reference signal may be sent to a terminal device.

Optionally, the first terminal device sends, on the first time-frequency resource of the j^{th} antenna port, the second reference signal to the second terminal device.

In this embodiment of this application, the first terminal device alternately transmits, by using all antenna ports, at least one reference signal (that is, an old pilot sequence) in the first reference signal set to the second terminal device, that is, sends the old pilot sequence on all the antenna ports, so that the second terminal device may perform reference signal received power (Reference Signal Received Power, RSRP) measurement based on the old pilot sequence, to learn time-frequency resource occupancy on each antenna port.

Optionally, the first reference signal set includes at least one reference signal; and similarly, the second reference signal set may also include at least one reference signal. For example, the reference signal may be a DMRS. The first reference signal set and the second reference signal set are corresponding to different pilot sequence generation rules.

It should be noted that a pilot sequence corresponding to the reference signal in the first reference signal set only needs to meet that: the second terminal device can implement reference signal received power RSRP measurement, and a generation rule of the pilot sequence corresponding to the reference signal in the first reference signal is not specifically limited.

The pilot sequence corresponding to the reference signal in the first reference signal set is a "Rel-14 pilot sequence", a "pilot sequence in an early release", or another pilot sequence that enables a second terminal device to implement the RSRP measurement. In addition, a generation rule of a pilot sequence corresponding to the reference signal in the second reference signal set is different from the generation rule of the pilot sequence corresponding to the first reference signal set. The pilot sequence corresponding to the reference signal in the second reference signal set is different from the "Rel-14 pilot sequence" or the "pilot sequence in an early release". The "pilot sequence in an early release" may be referred to as the "old pilot sequence".

Optionally, the second terminal device may identify the first reference signal, that is, may identify the old pilot sequence. For example, the second terminal device may be Rel-14 UE.

In this embodiment of this application, the second terminal device may support transmission on one or more antenna ports. When the second terminal device supports transmission on a plurality of antenna ports, a quantity of the plurality of antenna ports supported by the second terminal device may be less than a quantity of the antenna ports supported by the first terminal device.

Optionally, the first time-frequency resource may be understood as a pilot symbol location in a transmission time interval (Transmission Time Interval, TTI). For example, if there are four pilot symbol locations in one TTI, the first time-frequency resource may be any one of the four pilot symbol locations.

In some possible implementations, the obtaining, by a first terminal device, a first reference signal set and a second reference signal set includes:
determining, by the first terminal device, the first reference signal set and the second reference signal set based on scheduling assignment information.

In some possible implementations, the i^{th} antenna port is determined based on the first reference signal and the n antenna ports.

In some possible implementations, the i^{th} antenna port, the first reference signal, and the n antenna ports meet the following relationship:
m_legacy_{m_DMRSsymbol} = mod(m_DMRSsymbol, n), where
m_legacy_{m_DMRSsymbol} is the i^{th} antenna port on which the first reference signal is sent, m_DMRSsymbol is a sequence number of the first reference signal, and values of m_legacy_{m_DMRSsymbol} and m_DMRSsymbol are 0 or positive integers.

In some possible implementations, the determining, by the first terminal device, the first reference signal set and the second reference signal set based on scheduling assignment information includes:
determining, by the first terminal device, at least one first reference signal root sequence and at least one first cyclic shift value based on the scheduling assignment information;
determining, by the first terminal device, the first reference signal set based on the at least one first reference signal root sequence and the at least one first cyclic shift value; and
determining, by the first terminal device, the second reference signal set based on at least one second reference signal root sequence and at least one second cyclic shift value, where the first cyclic shift value is different from the second cyclic shift value.

Optionally, the first reference signal root sequence is the same as the second reference signal root sequence.

In other words, a reference signal root sequence corresponding to the second reference signal set may be the same as a reference signal root sequence corresponding to the first reference signal set.

In some possible implementations, the first cyclic shift value or the second cyclic shift value meets the following relationship:
n_CS(m_port) = mod((n_CS_legacy + k * (m_port-m_legacy_{m_DMRSsymbol})), 8), where
n_CS(m_port) is a cyclic shift value of a h^{th} antenna port, m_port is a sequence number of the h^{th} antenna port, the h^{th} antenna port is an antenna port in the n antenna ports, and a value of m_port is 0 or a positive integer, n_CS_legacy is a cyclic shift value used to generate the first reference signal, m_legacy_{m_DMRSsymbol} is the i^{th} antenna port on which the first reference signal is sent, and k is an integer; and
when n = 2, a value of k is -4, -3, -2, -1, 1, 2, 3, or 4; or when n = 3 or 4, the value of k is -2, -1, 1, or 2.

Here, both a cyclic shift value of the i^{th} antenna port and a cyclic shift value of the j^{th} antenna port may be determined according to the foregoing formula.

In some possible implementations, the at least one time-frequency resource used to send the first reference signal set and the second reference signal set includes a third symbol, a sixth symbol, a ninth symbol, and a 12^{th} symbol of one subframe, and the first time-frequency resource is one of the third symbol, the sixth symbol, the ninth symbol, and the 12^{th} symbol.

According to a second aspect, a reference signal transmission method is provided, including:
receiving, by a second terminal device on a first time-frequency resource, a first reference signal and a second reference signal sent by a first terminal device, where the first terminal device includes n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, where the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, and the second reference signal is a reference signal in a second reference signal set;
wherein at least one reference signal in the first reference signal set is sent by the first terminal device on each of the n antenna ports;
determining, by the second terminal device, a channel coefficient of the i^{th} antenna port based on the first reference signal; and
determining, by the second terminal device, a channel coefficient of the j^{th} antenna port based on the second reference signal. The first reference signal is an LTE-A Rel-14, i.e. old pilot sequence and the second reference signal is different from the LTE-A Rel-14 pilot sequence.

Optionally, the first reference signal set and the second reference signal set are obtained by the second terminal device based on scheduling assignment information corresponding to received data.

In the reference signal transmission method in this embodiment of this application, the second terminal device determines, by receiving the first reference signal and the second reference signal sent by the first terminal device and based on the first reference signal, the coefficient of a channel through which the first terminal device sends data, on the i^{th} antenna port, to the second terminal device, and determines, based on the second reference signal, the coefficient of a channel through which the first terminal device sends data, on the j^{th} antenna port, to the second terminal device, so as to estimate a channel through which data is sent on each antenna port of the first terminal device.

According to a third, unclaimed, aspect, a reference signal transmission method is provided, including:
obtaining, by a first terminal device, a first reference signal; and
alternately sending, by the first terminal device, on all subcarriers of a first time-frequency resource, the first reference signal by using an i^{th} antenna port and a j^{th} antenna port.

Optionally, the first reference signal is a Rel-14 reference signal.

Optionally, the first terminal device may alternately send, on all subcarriers of the first time-frequency resource, the first reference signal to a second terminal device.

In this embodiment of this application, the first terminal device alternately sends, on all subcarriers of the first time-frequency resource, the first reference signal to the second terminal device by using the i^{th} antenna port and the j^{th} antenna port, so that the second terminal device may perform RSRP measurement based on the first reference signal, to learn time-frequency resource occupancy on each antenna port.

According to a fourth aspect, a terminal device is provided, and is configured to perform the method in the first aspect or any possible implementation of the first aspect. Specifically, the terminal device includes:
an obtaining unit, configured to obtain a first reference signal set and a second reference signal set, where the terminal device includes n antenna ports, and n is a natural number greater than 1; and
a sending unit, configured to send a first reference signal on a first time-frequency resource of an i^{th} antenna port, where the i^{th} antenna port is any one of the n antenna ports, the first time-frequency resource is included in at least one preset time-frequency resource used to send the first reference signal set and the second reference signal set, and the first reference signal is a reference signal in the first reference signal set, where
the sending unit is further configured to send a second reference signal on the first time-frequency resource of a j^{th} antenna port, where the j^{th} antenna port is one of other antenna ports than the i^{th} antenna port in the n antenna ports, the second reference signal is a reference signal in the second reference signal set, and the second reference signal is different from the first reference signal; and
the sending unit is further configured to send, on each of the n antenna ports, at least one reference signal in the first reference signal set. The first reference signal is an LTE-A Rel-14, i.e. old pilot sequence and the second reference signal is different from the LTE-A Rel-14 pilot sequence.

In this embodiment of this application, the terminal device alternately transmits, by using all antenna ports, at least one reference signal (that is, an old pilot sequence) in the first reference signal set to a second terminal device, that is, sends the old pilot sequence on all the antenna ports, so that the second terminal device may perform RSRP measurement based on the old pilot sequence, to learn time-frequency resource occupancy on each antenna port.

In some possible implementations, the obtaining unit is specifically configured to:
determine the first reference signal set and the second reference signal set based on scheduling assignment information.

In some possible implementations, the i^{th} antenna port is determined based on the first reference signal and the n antenna ports.

In some possible implementations, the i^{th} antenna port, the first reference signal, and the n antenna ports meet the following relationship:
m_legacy_{m_DMRSsymbol} = mod(m_DMRSsymbol, n), where
m_legacy_{m_DMRSsymbol} is the i^{th} antenna port on which the first reference signal is sent, m_DMRSsymbol is a sequence number of the first reference signal, and values of m_legacyₘ__{DMRSsymbol} and m_DMRSsymbol are 0 or positive integers.

In some possible implementations, the obtaining unit is specifically configured to:
determine at least one first reference signal root sequence and at least one first cyclic shift value based on the scheduling assignment information;
determine the first reference signal set based on the at least one first reference signal root sequence and the at least one first cyclic shift value; and
determine the second reference signal set based on at least one second reference signal root sequence and at least one second cyclic shift value, where the first cyclic shift value is different from the second cyclic shift value.

In some possible implementations, the first reference signal root sequence is the same as the second reference signal root sequence.

In some possible implementations, the first cyclic shift value or the second cyclic shift value meets the following relationship:
n_CS(m_port) = mod((n_CS_legacy + k * (m_port-m_legacy_{m_DMRSsymbol})), 8), where
n_CS(m_port) is a cyclic shift value of a h^{th} antenna port, m_port is a sequence number of the h^{th} antenna port, the h^{th} antenna port is an antenna port in the n antenna ports, and a value of m_port is 0 or a positive integer, n_CS_legacy is a cyclic shift value used to generate the first reference signal, m_legacy_{m_DMRSsymbol} is the i^{th} antenna port on which the first reference signal is sent, and k is an integer; and
when n = 2, a value of k is -4, -3, -2, -1, 1, 2, 3, or 4; or when n = 3 or 4, the value of k is -2, -1, 1, or 2.

In some possible implementations, the at least one time-frequency resource used to send the first reference signal set and the second reference signal set includes a third symbol, a sixth symbol, a ninth symbol, and a 12^{th} symbol of one subframe, and the first time-frequency resource is one of the third symbol, the sixth symbol, the ninth symbol, and the 12^{th} symbol.

According to a fifth aspect, a terminal device is provided, and is configured to perform the method in the second aspect or any possible implementation of the second aspect. Specifically, the terminal device includes:
a receiving unit, configured to receive, on a first time-frequency resource, a first reference signal and a second reference signal sent by a first terminal device, where the first terminal device includes n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, where the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, and the second reference signal is a reference signal in a second reference signal set;
wherein at least one reference signal in the first reference signal set is sent by the first terminal device on each of the n antenna ports; and
a determining unit, configured to determine a channel coefficient of the i^{th} antenna port based on the first reference signal, where
the determining unit is further configured to determine a channel coefficient of the j^{th} antenna port based on the second reference signal. The first reference signal is an LTE-A Rel-14, i.e. old pilot sequence and the second reference signal is different from the LTE-A Rel-14 pilot sequence.

Optionally, the first reference signal set and the second reference signal set are obtained by the terminal device based on scheduling assignment information corresponding to received data.

The terminal device in this embodiment of this application determines, by receiving the first reference signal and the second reference signal sent by the first terminal device and based on the first reference signal, the coefficient of a channel through which the first terminal device sends data, on the i^{th} antenna port, to the terminal device, and determines, based on the second reference signal, the coefficient of a channel through which the first terminal device sends data, on the j^{th} antenna port, to the terminal device, so as to estimate a channel through which data is sent on each antenna port of the first terminal device.

According to a sixth, unclaimed, aspect, a terminal device is provided, and is configured to perform the method in the third aspect or any possible implementation of the third aspect. Specifically, the terminal device includes:
an obtaining unit, configured to obtain a first reference signal; and
a sending unit, configured to alternately send, on all sub carriers of a first time-frequency resource, the first reference signal by using an i^{th} antenna port and a j^{th} antenna port.

Optionally, the first reference signal is a Rel-14 reference signal.

Optionally, the terminal device may alternately send, on all subcarriers of the first time-frequency resource, the first reference signal to a second terminal device.

The terminal device in this embodiment of this application alternately sends, on all subcarriers of the first time-frequency resource, the first reference signal to the second terminal device by using the i^{th} antenna port and the j^{th} antenna port, so that the second terminal device may perform RSRP measurement based on the first reference signal, to learn time-frequency resource occupancy on each antenna port.

According to a seventh aspect, a terminal device is provided. The terminal device includes a processor, a memory, and a communications interface. The processor is connected to the memory and the communications interface. The memory is configured to store an instruction; the processor is configured to execute the instruction; and the communications interface is configured to communicate with another network element under control of the processor. When the processor executes the instruction stored in the memory, the processor performs the method in the first aspect or any possible implementation of the first aspect.

According to an eighth aspect, a terminal device is provided. The terminal device includes a processor, a memory, and a communications interface. The processor is connected to the memory and the communications interface. The memory is configured to store an instruction; the processor is configured to execute the instruction; and the communications interface is configured to communicate with another network element under control of the processor. When the processor executes the instruction stored in the memory, the processor performs the method in the second aspect or any possible implementation of the second aspect.

According to a ninth aspect, a terminal device is provided. The terminal device includes a processor, a memory, and a communications interface. The processor is connected to the memory and the communications interface. The memory is configured to store an instruction; the processor is configured to execute the instruction; and the communications interface is configured to communicate with another network element under control of the processor. When the processor executes the instruction stored in the memory, the processor performs the method in the third aspect or any possible implementation of the third aspect.

According to a tenth aspect, a computer readable storage medium is provided. The computer readable storage medium stores a program, and the program enables a terminal device to perform the reference signal transmission method according to the first aspect and any one of the implementations of the first aspect.

According to an eleventh aspect, a computer readable storage medium is provided. The computer readable storage medium stores a program, and the program enables a terminal device to perform the reference signal transmission method according to the second aspect and any one of the implementations of the second aspect.

According to a twelfth aspect, a computer readable storage medium is provided. The computer readable storage medium stores a program, and the program enables a terminal device to perform the reference signal transmission method according to the third aspect and any one of the implementations of the third aspect.

### BRIEF DESCRIPTION OF DRAWINGS

FIG. 1 is a schematic diagram of a scenario in which an embodiment of this application may be applied;
FIG. 2 is a schematic flowchart of a reference signal transmission method according to an embodiment of this application;
FIG. 3 is a schematic diagram of an example according to an embodiment of this application;
FIG. 4 is a schematic diagram of another example according to an embodiment of this application;
FIG. 5 is a schematic diagram of yet another example according to an embodiment of this application;
FIG. 6 is a schematic diagram of another example according to an embodiment of this application;
FIG. 7 is a schematic diagram of another example according to an embodiment of this application;
FIG. 8 is a schematic diagram of yet another example according to an embodiment of this application;
FIG. 9 is a schematic diagram of another example according to an embodiment of this application;
FIG. 10 is a schematic diagram of yet another example according to an embodiment of this application;
FIG. 11 is a schematic diagram of another example according to an embodiment of this application;
FIG. 12 is a schematic flowchart of a reference signal transmission method according to another embodiment of this application;
FIG. 13 is a schematic flowchart of a reference signal transmission method according to yet another embodiment of this application;
FIG. 14 is a schematic diagram of an example according to yet another embodiment of this application;
FIG. 15 is a schematic block diagram of a terminal device according to an embodiment of this application;
FIG. 16 is a schematic block diagram of a terminal device according to another embodiment of this application;
FIG. 17 is a schematic block diagram of a terminal device according to yet another embodiment of this application;
FIG. 18 is a structural block diagram of a terminal device according to an embodiment of this application;
FIG. 19 is a structural block diagram of a terminal device according to another embodiment of this application; and
FIG. 20 is a structural block diagram of a terminal device according to yet another embodiment of this application.

### DESCRIPTION OF EMBODIMENTS

The following describes the technical solutions in the embodiments of this application with reference to accompanying drawings.

It should be understood that the technical solutions in this embodiment of this application may be applied to a device-to-device (Device-to-Device, D2D) communications system, for example, an Internet of Things system, an in-vehicle network communications system, an Internet of Vehicles system, and a vehicle to vehicle (vehicle to vehicle, V2V) communications system.

It should be further understood that the technical solutions in the embodiments of this application may be applied to various communications systems, for example, current communications systems such as a global system for mobile communications (Global System for Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, and a universal mobile telecommunications system (Universal Mobile Telecommunications System, UMTS), and in particular, to a future 5G system.

It should be further understood that, in the embodiments of this application, a terminal device may communicate with one or more core networks (Core Network) by using a radio access network (Radio Access Network, RAN). The terminal device may be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, or terminal device in a future 5G network. The terminal device may include a D2D device, cellular user equipment (Cellular User Equipment, CUE), vehicle user equipment (Vehicle User Equipment, VUE), and the like.

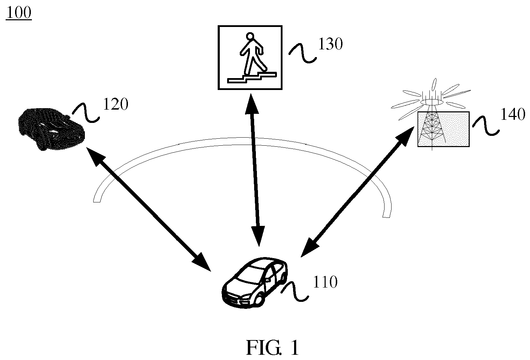

FIG. 1 is a schematic diagram of a scenario in which an embodiment of this application may be applied. It should be noted that an example in FIG. 1 is intended to help a person skilled in the art better understand this embodiment of this application instead of limiting the scope of this embodiment of this application.

Vehicle to vehicle V2V communication, vehicle-to-pedestrian (Vehicle-to-Pedestrian, V2P) communication, and vehicle-to-infrastructure (Vehicle to Infrastructure, V2I) communication are collectively referred to as vehicle-to-everything (Vehicle-to-Everything, V2X) communication. A primary application scenario of this application may be a D2D scenario in a long term evolution advanced (Long Term Evolution Advanced, LTE-A) Rel-12/13 (Release 12/13, Rel-12/13) system, a V2X scenario in LTE-A (Release 14, Rel-14) system, a V2X scenario in LTE-A (Release 15, Rel-15) system, or another sidelink communication scenario. In FIG. 1, a vehicle 110, a vehicle 120, a pedestrian 130, and infrastructure 140 all have a D2D capability, and D2D communication may be performed among the vehicle 110, the vehicle 120, the pedestrian 130, and the infrastructure 140. V2V means that communication may be performed between the vehicle 110 and the vehicle 120; V2P means that communication may be performed between the vehicle 110 and the pedestrian 130; and V2I means that communication may be performed between the vehicle 110 and the infrastructure 140.

It should be understood that, for ease of description, only communication between a single vehicle and a vehicle, communication between a single pedestrian and a vehicle, and communication between a single vehicle and a piece of infrastructure are described in FIG. 1. This application is not limited thereto. For example, in the Internet of Vehicles system, there may be a larger quantity of vehicles. This is not limited in this application.

For easy understanding of the technical solutions in the embodiments of this application, the following describes some terms or concepts that may be used in this application.

In Rel-14, the 3rd Generation Partnership Project (3rd Generation Partnership Project, 3GPP) standardizes a resource selection manner for a terminal device (the following uses Rel-14 UE as an example for description) in the Internet of Vehicles system. In a mode in which the Rel-14 UE independently selects a resource, a substep of selecting a transmit resource by the UE is that the Rel-14 UE excludes a reserved time-frequency resource by decoding scheduling assignment (Scheduling Assignment, SA) information and measuring reference signal received power (Reference Signal Received Power, RSRP). The substep is described in detail below.
(1) The Rel-14 UE obtains, by decoding the received scheduling assignment SA information, a time-frequency resource that is occupied by data transmission corresponding to the SA, a priority of to-be-transmitted data, and a reserved time-frequency resource indicated by the SA. The Rel-14 UE determines, based on cyclic redundancy check (Cyclic Redundancy Check, CRC), a system frame number, and a pilot symbol location that are obtained by decoding the SA, a pilot root sequence and cyclic time shift of each pilot location at which the data transmission corresponding to the SA is performed.
(2) The Rel-14 UE measures RSRP of the data transmission corresponding to the SA based on the obtained pilot root sequence and the obtained cyclic time shift. If the RSRP is greater than a first threshold, and the reserved time-frequency resource indicated by the SA overlaps with a selectable resource or a cycle of the selectable resource of the Rel-14 UE, the Rel-14 UE excludes the resource from a selectable resource set. The first threshold is determined by the priority in the SA and the priority of the to-be-transmitted data of the Rel-14 UE.

3GPP is discussing evolution of a Rel-15 Internet of Vehicles system, one of evolution goals is to discuss feasibility and a gain of adding a transmit diversity feature to Rel-15 UE under the premise that the Rel-15 UE and the Rel-14 UE share a resource pool without causing significant impact on performance of the Rel-14 UE. Currently, it has become an inevitable trend that a physical sidelink shared channel (Physical Sidelink Shared Channel, PSSCH) uses a plurality of antenna ports to implement transmit diversity. For example, using two antenna ports as an example, if UE (for example, the Rel-15 UE) that supports transmission on a plurality of antenna ports sends a pilot sequence to the Rel-14 UE on a first antenna port and a second antenna port respectively, the first antenna port occupies the same time-frequency resource as the second antenna port, where the pilot sequence (which may be referred to as a "Rel-14 pilot sequence" or a "pilot sequence in an early release") transmitted on the first antenna port is constructed based on a Rel-14 pilot sequence generation rule, the pilot sequence transmitted on the second antenna port is constructed based on another rule and needs to be different from the pilot sequence constructed based on the Rel-14 pilot sequence generation rule. The Rel-14 UE may identify the Rel-14 pilot sequences and perform RSRP measurement on the antenna port on which the Rel-14 pilot sequence is sent, that is, the first antenna port, to obtain time-frequency resource occupancy on the first antenna port. However, the Rel-14 UE can identify only the Rel-14 pilot sequence and cannot identify a pilot sequence generated based on another rule, and consequently, resource usage of another antenna port cannot be learned.

In such a context, how to design a pilot sending method to enable the terminal device to learn time-frequency resource occupancy for data transmitted on all antenna ports is a problem that needs to be resolved urgently.

It should be understood that, in the embodiments of this application, the pilot may be understood as a reference signal (Reference Signal, RS), for example, a demodulation reference signal (Demodulation Reference Signal, DMRS) or a sounding reference signal (Sounding Reference Signal, SRS).

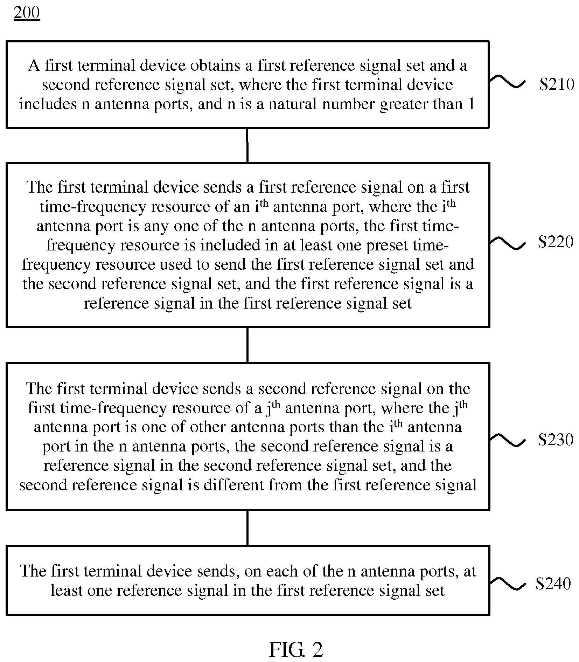

FIG. 2 is a schematic flowchart of a reference signal transmission method 200 according to an embodiment of this application. The method 200 may be performed by a first terminal device, and optionally, the first terminal device may be a transmit device that supports transmission on a plurality of antenna ports, such as a D2D device, a V2V device, or a V2X device. As shown in FIG. 2, the method 200 includes the following steps.

S210. A first terminal device obtains a first reference signal set and a second reference signal set, where the first terminal device includes n antenna ports, and n is a natural number greater than 1.

Optionally, the first reference signal set or the second reference signal set may be specified in a protocol, and the first terminal device may directly obtain the first reference signal set or the second reference signal set.

Alternatively, optionally, the first terminal device may determine the first reference signal set and the second reference signal set in another manner.

Optionally, the first terminal device supports transmission on n antenna ports, where n is a natural number greater than 1. For example, when n is two, the first terminal device supports transmission on two antenna ports; or when n is four, the first terminal device supports transmission on four antenna ports.

For example, optionally, S210 includes:
determining, by the first terminal device, the first reference signal set and the second reference signal set based on scheduling assignment information.

Optionally, the scheduling assignment information is SA information.

Herein, the first reference signal set and the second reference signal set may be determined by a same part or different parts of the scheduling assignment information. For example, the first terminal device decodes the SA information to obtain CRC and obtain information such as a time-frequency resource that is occupied by data transmission corresponding to the SA information, priority of to-be transmitted data, a modulation level of the to-be-transmitted data, a system frame number (the system frame number may be obtained through time synchronization), and a pilot symbol location (for example, the protocol may specify, in a plurality of pilot symbol locations in a TTI, a pilot symbol location at which a pilot sequence can be transmitted). The first terminal device determines, based on the CRC, the system frame number, and the pilot symbol location, a pilot root sequence and cyclic time shift of each pilot location at which the data transmission corresponding to the SA is performed. The first terminal device may determine the first reference signal set based on the pilot root sequence and the cyclic time shift of each pilot location at which the data transmission corresponding to the SA is performed. The cyclic time shift may also be referred to as cyclic shift.

Alternatively, the first terminal device may determine the second reference signal set based on a part or all of the SA information.

For example, the first terminal device may determine, based on the part of the SA information, the system frame number and the pilot symbol location, the pilot root sequence and the cyclic time shift of each pilot location at which the data transmission corresponding to the SA is performed, and determine the second reference signal set by using the pilot root sequence and the cyclic time shift of each pilot location at which the data transmission corresponding to the SA is performed.

Optionally, a root sequence of the second reference signal set may be the same as a root sequence of the first reference signal set.

Optionally, the first reference signal set includes at least one reference signal; and similarly, the second reference signal set may also include at least one reference signal. For example, the reference signal may be a DMRS. The first reference signal set and the second reference signal set are corresponding to different pilot sequence generation rules.

It should be noted that a pilot sequence corresponding to the reference signal in the first reference signal set only needs to meet that: a second terminal device can implement reference signal received power RSRP measurement, and a generation rule of the pilot sequence corresponding to the reference signal in the first reference signal is not specifically limited.

For example, the pilot sequence corresponding to the reference signal in the first reference signal set may be a "Rel-14 pilot sequence", a "pilot sequence in an early release", or another pilot sequence that enables a second terminal device to implement the RSRP measurement. The "Rel-14 pilot sequence" or the "pilot sequence in an early release" may be understood as: a pilot sequence used when data is transmitted by using only one antenna port, or a pilot sequence used when data is transmitted without using a transmit diversity transmission mode, or a pilot sequence used when data is transmitted without using a multiple-input multiple-output (Multiple-Input Multiple-Output, MIMO) transmission mode or a multiple-input single-output transmission mode, or a pilot sequence used when data is transmitted without using the transmit diversity transmission mode, the MIMO transmission mode, or Multi-Input Single-Output transmission mode. In other words, the first reference signal set is constructed based on a pilot sequence rule in the Rel-14. For a detailed generation method, refer to a TS36.211 protocol (which may be known by a person skilled in the art). For the DMRS, for a Rel-14 PSSCH DMRS sequence selection method, refer to section 9.8 of the TS36.211 protocol. In Table 9.8.1 of section 9.8, three parameters corresponding to group frequency modulation group hopping may be used to determine a root sequence on a specific symbol (root sequences on four pilot symbols in one transmission time interval TTI in the Rel-14 are different). For a detailed determining method, refer to section 5.1.1.3 (where u is a number of a root sequence). Cyclic shift Cyclic shift may be used to determine a cyclic shift value (cyclic shift on the four pilot symbols in the one TTI in the Rel-14 is the same).

In addition, in this embodiment of this application, a generation rule of a pilot sequence corresponding to the reference signal in the second reference signal set is different from the generation rule of the pilot sequence corresponding to the first reference signal set. For example, the pilot sequence corresponding to the reference signal in the second reference signal set is different from the "Rel-14 pilot sequence" or the "pilot sequence in an early release". For example, the pilot sequence corresponding to the reference signal in the second reference signal is the pilot sequence used when data is transmitted by using the transmit diversity transmission mode.

It should be understood that, in a future protocol release (for example, a Rel-15), the foregoing pilot sequences may coexist, such as the pilot sequence that does not use the transmit diversity transmission mode or a mode of transmission on one antenna port, a pilot sequence that uses the transmit diversity transmission mode, or another possible pilot sequence. In this case, the technical solutions in this embodiment of this application are still applicable.

For ease of description, the "pilot sequence in an early release" is referred to as the "old pilot sequence" below.

S220. The first terminal device sends a first reference signal on a first time-frequency resource of an i^{th} antenna port, where the i^{th} antenna port is any one of the n antenna ports, the first time-frequency resource is included in at least one preset time-frequency resource used to send the first reference signal set and the second reference signal set, and the first reference signal is a reference signal in the first reference signal set.

In this embodiment of this application, the first terminal device may send the first reference signal through broadcast, and the first reference signal may be received by all terminal devices; or the first reference signal may be sent to a terminal device.

Optionally, the first terminal device sends, on the first time-frequency resource of the i^{th} antenna port, the first reference signal to the second terminal device.

Optionally, the second terminal device may identify the first reference signal, that is, may identify the old pilot sequence. For example, the second terminal device may be Rel-14 UE.

Optionally, the second terminal device may also be Rel-15 UE, and this is not limited.

In this embodiment of this application, the second terminal device may support transmission on one or more antenna ports. When the second terminal device supports transmission on a plurality of antenna ports, a quantity of the plurality of antenna ports supported by the second terminal device needs to be less than a quantity of the antenna ports supported by the first terminal device. For example, the second terminal device may support transmission on two antenna ports, and the first terminal device supports transmission on four antenna ports, then, the first terminal device transmits the old pilot sequences to the two antenna ports of the second terminal device by using the reference signal transmission method in this embodiment of this application, so that the second terminal device may still measure the old pilot sequences that are sent by the first terminal device by using different antenna ports, so as to obtain resource occupancy on the antenna ports.

Optionally, the first time-frequency resource may be understood as a pilot symbol location in a transmission time interval (Transmission Time Interval, TTI). For example, if there are four pilot symbol locations in one TTI, the first time-frequency resource may be any one of the four pilot symbol locations.

It should be understood that a quantity of pilot symbol locations in one TTI may be four or another value, and this is not limited in this embodiment of this application.

It should be further understood that pilot symbol locations in one TTI are not specifically limited in this embodiment of this application, for example, the first reference signal may be sent at one or more pilot symbol locations in one TTI. The plurality of pilot symbol locations may be a plurality of discontinuous pilot symbol locations, or may be a plurality of continuous pilot symbol locations (for example, a plurality of continuous symbols may be similar to LTE Rel-10 UE-specific reference signals). Optionally, the plurality of pilot symbol locations may be continuous or discontinuous in frequency domain (for example, a plurality of pilot symbols that are discontinuous in frequency domain may be similar to LTE downlink cell-specific reference signals).

S230. The first terminal device sends a second reference signal on the first time-frequency resource of a j^{th} antenna port, where the j^{th} antenna port is one of other antenna ports than the i^{th} antenna port in the n antenna ports, the second reference signal is a reference signal in the second reference signal set, and the second reference signal is different from the first reference signal.

Similarly, in this embodiment of this application, the first terminal device may send the second reference signal through broadcast, and the second reference signal may be received by all terminal devices; or the second reference signal may be sent to a terminal device.

Optionally, the first terminal device sends, on the first time-frequency resource of the j^{th} antenna port, the second reference signal to the second terminal device.

In this embodiment of this application, data transmission of the n antenna ports occupies a same time-frequency resource. The first terminal device may transmit different reference signals or pilot sequences on the same time-frequency resource of different antenna ports.

Optionally, the first terminal device sends, on the first time-frequency resource of the i^{th} antenna port, the first reference signal to the second terminal device, and may simultaneously send, on the first time-frequency resource of the j^{th} antenna port, the second reference signal to the second terminal device. The i^{th} antenna port and the j^{th} antenna port are different antenna ports in the n antenna ports.

S240. The first terminal device sends, on each of the n antenna ports, at least one reference signal in the first reference signal set.

In this embodiment of this application, the first terminal device alternately transmits, by using all antenna ports, at least one reference signal (that is, the old pilot sequence) in the first reference signal set to the second terminal device, that is, sends the old pilot sequence on all the antenna ports, so that the second terminal device may perform measurement based on the old pilot sequence, to learn time-frequency resource occupancy on each antenna port.

It should be noted that, when the first terminal device transmits the old pilot sequence on all the antenna ports, a sequence of the antenna ports may not be specified; or the old pilot sequence may not be transmitted on one time-frequency resource or some time-frequency resources (or at pilot symbol locations), provided that all the antenna ports can send the old pilot sequence sent on each time-frequency resource.

Optionally, the at least one time-frequency resource used to send the first reference signal set and the second reference signal set includes a third symbol, a sixth symbol, a ninth symbol, and a 12^{th} symbol of one subframe, and the first time-frequency resource is one of the third symbol, the sixth symbol, the ninth symbol, and the 12^{th} symbol.

For example, the first terminal device may send the first reference signal set on a third symbol and a ninth symbol of a subframe by using a first antenna port, and send the second reference signal set on a sixth symbol and a 12^{th} symbol by using the first antenna port. In addition, the first terminal device may send the second reference signal set on the third symbol and the ninth symbol of the subframe by using a second antenna port, and send the first reference signal set on the sixth symbol and the 12^{th} symbol by using the first antenna port. In this way, the second terminal device measures the reference signals on the third symbol, the sixth symbol, the ninth symbol, and the 12^{th} symbol, to learn time-frequency resource occupancy for data transmitted on the two antenna ports of the first terminal device.

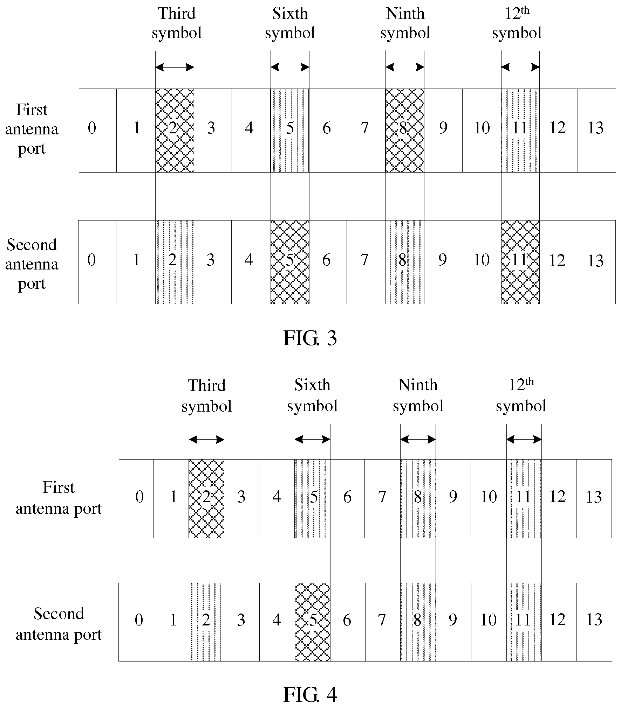

For ease of understanding, the following uses FIG. 3 to FIG. 6 as examples to describe a case in which the first terminal device supports transmission on two antenna ports. It should be understood that FIG. 3 to FIG. 6 are merely schematic diagrams of examples according to this embodiment of this application, and impose no limitation on this embodiment of this application.

For example, FIG. 3 is a schematic diagram of an example according to this embodiment of this application. As shown in FIG. 3, using two antenna ports (Antenna Port) as an example, the first terminal device sends, on both the first antenna port and the second antenna port, the old pilot sequences to the second terminal device; to be specific, the first terminal device sends the old pilot sequence on the third symbol and the ninth symbol by using the first antenna port, and sends the old pilot sequence on the sixth symbol and the 12^{th} symbol by using the second antenna port. In addition, the first terminal device sends another pilot sequence (that is, a pilot sequence different from the old pilot sequence) on the sixth symbol and the 12^{th} symbol by using the first antenna port, and the first terminal device sends another pilot sequence on the third symbol and the ninth symbol by using the second antenna port.

In this way, the second terminal device may measure the old pilot sequence sent on each symbol, to learn time-frequency resource usage of each antenna port. Specifically, the second terminal device measures the old pilot sequence sent on the third symbol and the ninth symbol to obtain time-frequency resource occupancy for data transmitted on the first antenna port, and measures the old pilot sequence sent on the sixth symbol and the 12^{th} symbols, to obtain time-frequency resource occupancy for data transmitted on the second antenna port.

For another example, FIG. 4 is a schematic diagram of another example according to this embodiment of this application. As shown in FIG. 4, the first terminal device sends the old pilot sequence on the third symbol by using the first antenna port, and sends the old pilot sequence on the sixth symbol by using the second antenna port. In addition, the first terminal device sends another pilot sequence (that is, a pilot sequence that is different from the old pilot sequences) on the sixth symbol, the ninth symbol, and the 12^{th} symbol by using the first antenna port, and the first terminal device sends another pilot sequence on the third symbol, the ninth symbol, and the 12^{th} symbol by using the second antenna port. It may be learned from FIG. 4, the first terminal device may not transmit the old pilot sequence on the ninth symbol and the 12^{th} symbol. In this case, the second terminal device may still measure the old pilot sequence sent on each symbol, to learn time-frequency resource usage of the first antenna port and the second antenna port.

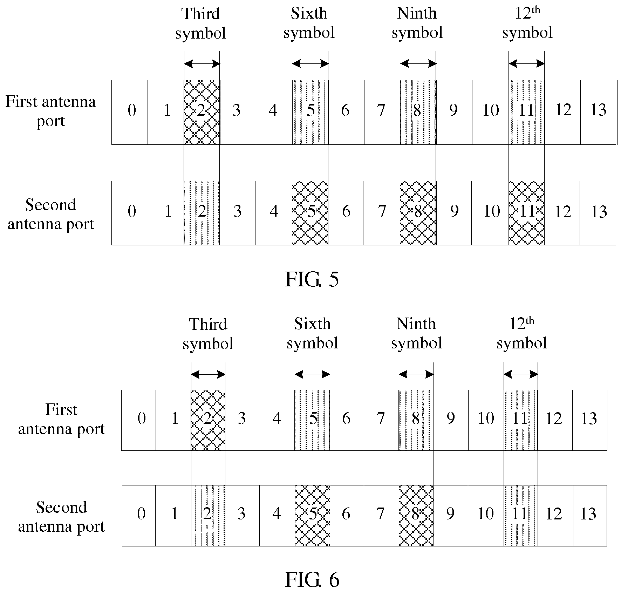

For another example, FIG. 5 is a schematic diagram of yet another example according to this embodiment of this application. As shown in FIG. 5, the first terminal device sends the old pilot sequence on the third symbol by using the first antenna port, and sends the old pilot sequence on the sixth symbol, the ninth symbol, and the 12^{th} symbol by using the second antenna port. In addition, the first terminal device sends another pilot sequence (that is, a pilot sequence that is different from the old pilot sequences) on the sixth symbol, the ninth symbol, and the 12^{th} symbol by using the first antenna port; and the first terminal device sends another pilot sequence on the third symbol by using the second antenna port. It can be learned from FIG. 5, a quantity of times that the first terminal device sends the old pilot sequence by using the first antenna port is different from a quantity of times that the first terminal device sends the old pilot sequence by using the second antenna port. In this case, the second terminal device may still measure the old pilot sequence sent on each symbol, to learn time-frequency resource usage of the first antenna port and the second antenna port.

For another example, FIG. 6 is a schematic diagram of another example according to this embodiment of this application. As shown in FIG. 6, the first terminal device sends the old pilot sequence on the third symbol by using the first antenna port, and sends the old pilot sequence on the sixth symbol and the ninth symbol by using the second antenna port. In addition, the first terminal device sends another pilot sequence (that is, a pilot sequence that is different from the old pilot sequences) on the sixth symbol, the ninth symbol, and the 12^{th} symbol by using the first antenna port, and the first terminal device sends another pilot sequence on the third symbol and the 12^{th} symbol by using the second antenna port. It can be learned from FIG. 6, the first terminal device may not transmit the old pilot sequence on the 12^{th} symbol, and the quantity of times that the first terminal device sends the old pilot sequence by using the first antenna port is different from the quantity of times that the first terminal device sends the old pilot sequence by using the second antenna port. In this case, the second terminal device may still measure the old pilot sequence sent on each symbol, to learn time-frequency resource usage of the first antenna port and the second antenna port.

It should be understood that the foregoing two antenna ports are merely used as an example for description, and impose no limitation on this embodiment of this application.

It should be further understood that the foregoing symbols (for example, the third symbol, the sixth symbol, the ninth symbol, and the 12^{th} symbol) are merely used as an example for detailed description, and in practice, another possible time domain location or another symbol number may be included. This is not limited.

Optionally, the i^{th} antenna port is determined based on the first reference signal and the n antenna ports.

Specifically, the first terminal device may determine, based on a total quantity of antenna ports used for data transmission and a sequence number corresponding to the old pilot sequence (that is, the first reference signal), an antenna port on which the old pilot sequence is sent, for example, the i^{th} antenna port.

Optionally, the i^{th} antenna port, the first reference signal, and the n antenna ports meet the following relationship:
m_legacy_{m_DMRSsymbol} = mod(m_DMRSsymbol, n), where
m_legacy_{m_DMRSsymbol} is the i^{th} antenna port on which the first reference signal is sent, m_DMRSsymbol is the sequence number of the first reference signal, and values of m_legacy_{m_DMRSsymbol} and m_DMRSsymbol are 0 or positive integers.

That is, the first terminal device may perform modulo operation on the sequence number of the first reference signal and the n antenna ports, to obtain the antenna port on which the first reference signal is sent.

Optionally, that the first terminal device determines the first reference signal set and the second reference signal set based on the scheduling assignment information includes:
determining, by the first terminal device, at least one first reference signal root sequence and at least one first cyclic shift value based on the scheduling assignment information;
determining, by the first terminal device, the first reference signal set based on the at least one first reference signal root sequence and the at least one first cyclic shift value; and
determining, by the first terminal device, the second reference signal set based on at least one second reference signal root sequence and at least one second cyclic shift value, where the first cyclic shift value is different from the second cyclic shift value.

Specifically, the first terminal device may obtain, by decoding the SA information, a reference signal root sequence (for example, the first reference signal root sequence) and a cyclic shift value (for example, the first cyclic shift value) of each pilot location at which the data transmission corresponding to the SA is performed, and determine the first reference signal set based on the obtained at least one first reference signal root sequence and the obtained at least one first cyclic shift value. The first terminal device may further determine the second reference signal set based on the at least one second cyclic shift value. The first cyclic shift value is different from the second cyclic shift value.

Optionally, the first reference signal root sequence is the same as the second reference signal root sequence.

In other words, a reference signal root sequence corresponding to the second reference signal set is the same as a reference signal root sequence corresponding to the first reference signal set.

It should be understood that introduction of the numbers "first" and "second" herein is merely intended to distinguish between different objects, for example, distinguish between different cyclic shift values or reference signal root sequences, and imposes no limitation on this embodiment of this application.

Optionally, the first cyclic shift value or the second cyclic shift value meets the following relationship:
n_CS(m_port) = mod((n_CS_legacy + k * (m_port-m_legacy_{m_DMRSsymbol})), 8), where
n_CS(m_port) is a cyclic shift value of a h^{th} antenna port, m_port is a sequence number of the h^{th} antenna port, the h^{th} antenna port is an antenna port in the n antenna ports, and a value of m_port is 0 or a positive integer, n_CS_legacy is a cyclic shift value used to generate the first reference signal, m_legacy_{m_DMRSsymbol} is the i^{th} antenna port on which the first reference signal is sent, and k is an integer; and
when n = 2, a value of k is -4, -3, -2, -1, 1, 2, 3, or 4; or when n = 3 or 4, the value of k is -2, -1, 1, or 2.

It should be understood that the at least one cyclic shift value corresponding to the first reference signal set and the at least one cyclic shift value corresponding to the second reference signal set are all applicable to the foregoing formula.

Specifically, cyclic shift of each of the n antenna ports may be determined according to the following formula:
n_CS(m_port) = mod((n_CS_legacy + k * (m_port-m_legacy_{m_DMRSsymbol})), 8), where
n_CS(m_port) is the cyclic shift value of the h^{th} antenna port in the n antenna ports, m_port is the sequence number of the h^{th} antenna port, n_CS_legacy is the cyclic shift value that is used to generate the first reference signal (that is, the cyclic shift value of the old pilot sequence), and m_legacy_{m_DMRSsymbol} is the foregoing i^{th} antenna port on which the first reference signal is sent (that is, the old pilot sequence). K is a coefficient related to n, and the value of k may be adjusted or set based on a value of n.

For example, when n = 2, the value of k is -4, -3, -2, -1, 1, 2, 3, or 4; or when n = 3 or 4, the value of k is -2, -1, 1, or 2.

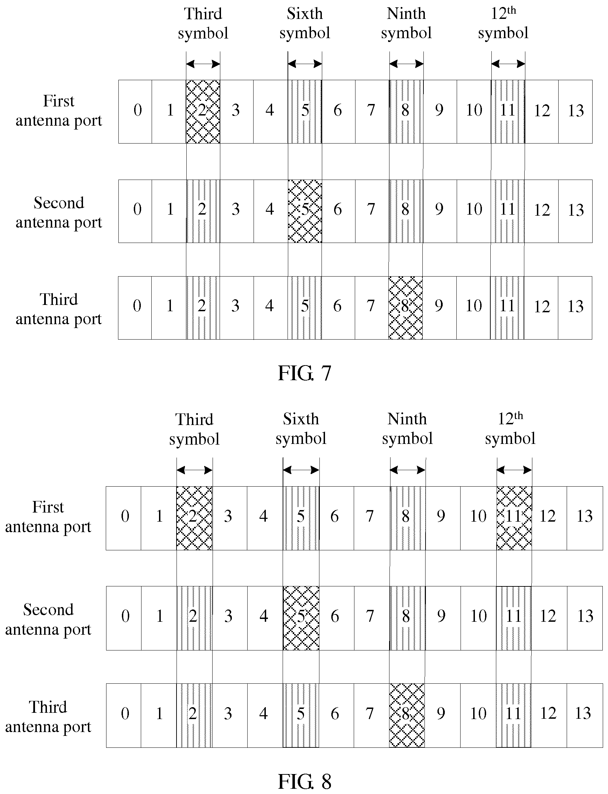

With reference to examples in FIG. 7 to FIG. 10, the following describes a case in which the first terminal device supports transmission on three antenna ports.

For example, FIG. 7 is a schematic diagram of another example according to this embodiment of this application. As shown in FIG. 7, the first terminal device sends, on the first antenna port, the second antenna port and a third antenna port, the old pilot sequences to the second terminal device; to be specific, the first terminal device sends the old pilot sequence on the third symbol by using the first antenna port, sends the old pilot sequence on the sixth symbol by using the second antenna port, and sends the old pilot sequence on the ninth symbol by using the third antenna port. In addition, the first terminal device sends another pilot sequence (that is, a pilot sequence that is different from the old pilot sequences) on the sixth symbol, the ninth symbol, and the 12^{th} symbol by using the first antenna port; the first terminal device sends another pilot sequence on the third symbol, the ninth symbol, and the 12^{th} symbol by using the second antenna port; and the first terminal device sends the another pilot sequence on the third symbol, the ninth symbol, and the 12^{th} symbol by using the second antenna port.

In FIG. 7, the first terminal device may send other pilot sequences instead of the old pilot sequences on the 12^{th} symbol by using the three antenna ports.

In this way, the second terminal device may measure the old pilot sequence sent on each symbol, to learn time-frequency resource usage on each antenna port. Specifically, the second terminal device measures the old pilot sequence sent on the third symbol to obtain time-frequency resource occupancy for data transmitted on the first antenna port, measures the old pilot sequence sent on the sixth symbol to obtain time-frequency resource occupancy for data transmitted on the second antenna port, and measures the old pilot sequence sent on the ninth symbol to obtain time-frequency resource occupancy for data transmitted on the second antenna port.

For another example, FIG. 8 is a schematic diagram of yet another example according to this embodiment of this application. As shown in FIG. 8, a difference from FIG. 7 is that the first terminal device also sends, on the 12^{th} symbol, the old pilot sequence to the second terminal device by using the first antenna port. In this way, the second terminal device may measure the old pilot sequence sent on the 12^{th} symbol, to learn time-frequency resource occupancy on the first antenna port on the 12^{th} symbol.

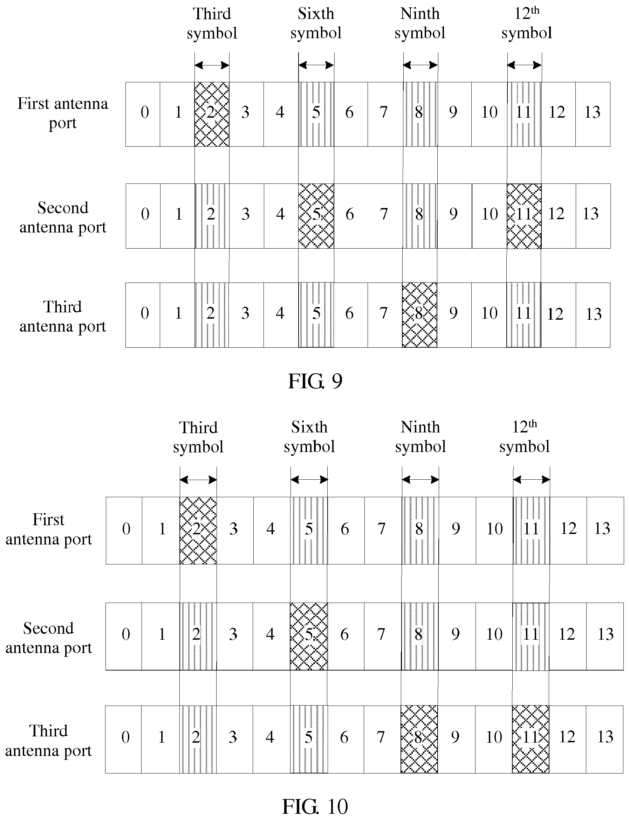

For another example, FIG. 9 is a schematic diagram of another example according to this embodiment of this application. As shown in FIG. 9, a difference from FIG. 8 is that the first terminal device sends, on the 12^{th} symbol, the old pilot sequence to the second terminal device by using the second antenna port. In this way, the second terminal device may measure the old pilot sequence sent on the 12^{th} symbol, to learn time-frequency resource occupancy on the second antenna port on the 12^{th} symbol.

For another example, FIG. 10 is a schematic diagram of yet another example according to this embodiment of this application. As shown in FIG. 10, a difference from FIG. 8 is that the first terminal device sends, on the 12^{th} symbol, the old pilot sequence to the second terminal device by using the third antenna port. In this way, the second terminal device may measure the old pilot sequence sent on the 12^{th} symbol, to learn time-frequency resource occupancy on the third antenna port on the 12^{th} symbol.

It should be understood that the foregoing uses an example in which one TTI includes four symbols for description. This is not limited in practice.

In conclusion, the first terminal device may not transmit the old pilot sequence on any one of antenna ports corresponding to some symbol locations (as shown in FIG. 7), or may transmit the old pilot sequence on one antenna port at each symbol location (as shown in FIG. 8 to FIG. 10). Alternatively, it may be understood that, when a quantity of pilot symbols in one TTI is greater than the quantity of antenna ports, quantities of times that the first terminal device transmits the old pilot sequence on all the antenna ports in one TTI are the same or different. For example, in FIG. 7, the quantities of times that the first terminal device transmits the old pilot sequence on all the antenna ports are the same (that is, the old pilot sequence is transmitted once on each antenna port); in FIG. 8 to FIG. 10, the quantities of times that the first terminal device transmits the old pilot sequence on all the antenna ports are different (for example, the old pilot sequence is transmitted twice on some antenna ports, and the old pilot sequence is transmitted once on some antenna ports).

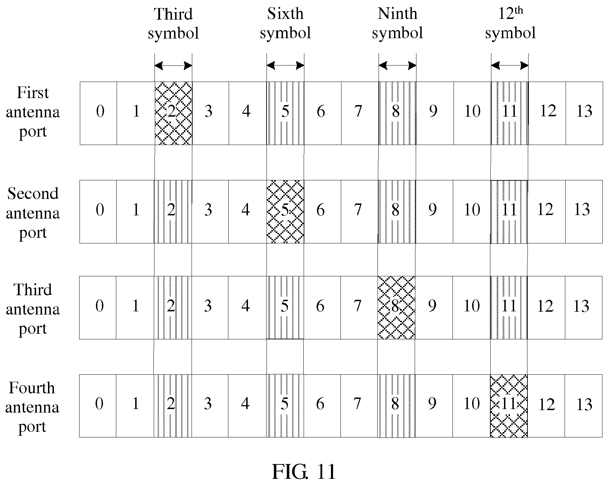

For another example, FIG. 11 is a schematic diagram of another example according to this embodiment of this application. As shown in FIG. 11, the first terminal device supports four antenna ports. The first terminal device sends, on the first antenna port, the second antenna port, the third antenna port, and a fourth antenna port, the old pilot sequences to the second terminal device; to be specific, the first terminal device sends the old pilot sequence on the third symbol by using the first antenna port, sends the old pilot sequence on the sixth symbol by using the second antenna port, sends the old pilot sequence on the ninth symbol by using the third antenna port, and sends the old pilot sequence on the 12^{th} symbol by using the fourth antenna port. In addition, the first terminal device sends another pilot sequence (that is, a pilot sequence that is different from the old pilot sequences) on the sixth symbol, the ninth symbol, and the 12^{th} symbol by using the first antenna port; the first terminal device sends another pilot sequence on the third symbol, the ninth symbol, and the 12^{th} symbol by using the second antenna port; and the first terminal device sends another pilot sequence on the third symbol, the ninth symbol, and the 12^{th} symbol by using the second antenna port.

Similarly, the second terminal device may measure the old pilot sequence sent on each symbol, to learn time-frequency resource usage of each of the four antenna ports.

It should be understood that the foregoing examples in FIG. 3 to FIG. 11 are merely intended to facilitate understanding of the technical solutions in the embodiments of this application, and impose no limitation on this embodiment of this application. There may be more implementations in practice. This is not limited.

It should be further understood that, in FIG. 3 to FIG. 11, an area other than the symbol on which the pilot sequences (which include the old pilot sequence and the another pilot sequence) are sent, that is, the areas represented by □ in FIG. 3 to FIG. 11, may be used to transmit data, or be used to switch a timeslot (Gap), or be used for automatic gain control (Automatic Gain Control, AGC), or be used to protect a timeslot instead of transmitting a signal, or be reserved for another purpose. This is not limited.

The foregoing has described the reference signal transmission method according to the embodiments of this application from a perspective of a sending side (that is, the first terminal device). The following describes the reference signal transmission method according to the embodiments of this application from a perspective of a receiving side (when the second terminal device is Rel-15 UE).

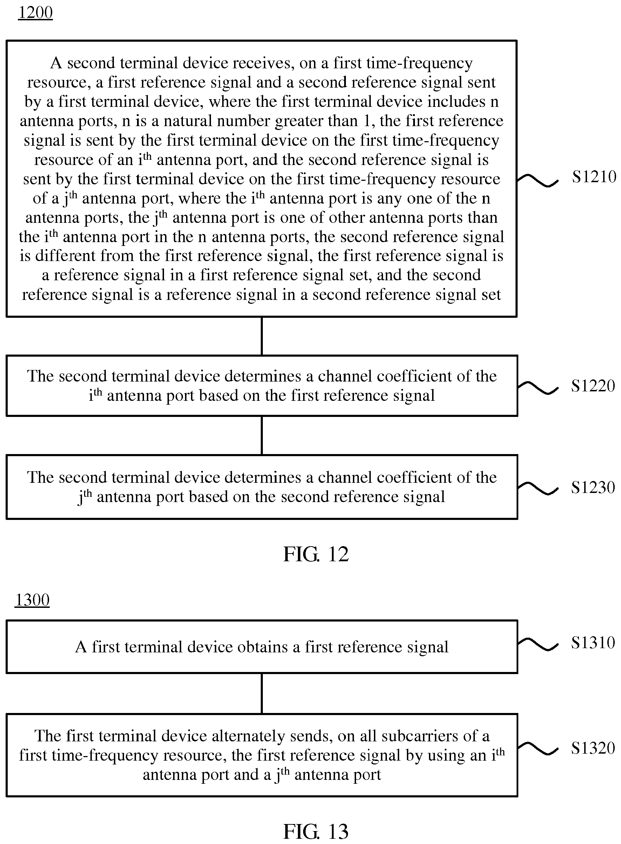

FIG. 12 is a schematic flowchart of a reference signal transmission method 1200 according to another embodiment of this application. The method 1200 may be performed by a second terminal device. As shown in FIG. 12, and the method 1200 includes the following steps.

S1210. A second terminal device receives, on a first time-frequency resource, a first reference signal and a second reference signal sent by a first terminal device, where the first terminal device includes n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, where the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, the second reference signal is a reference signal in a second reference signal set, and the first reference signal set and the second reference signal set are obtained by the first terminal device.

S 1220. The second terminal device determines a channel coefficient of the i^{th} antenna port based on the first reference signal.

S 1230. The second terminal device determines a channel coefficient of the j^{th} antenna port based on the second reference signal.

Optionally, the first reference signal set or the second reference signal set may be specified in a protocol, and the second terminal device may directly obtain the first reference signal set or the second reference signal set.

Alternatively, optionally, the second terminal device may determine the first reference signal set and the second reference signal set in another manner.

Optionally, the first reference signal set and the second reference signal set are obtained by the second terminal device based on scheduling assignment SA information corresponding to received data.

Specifically, when determining the channel coefficient, the second terminal device may obtain a reference sequence based on the SA information corresponding to the received data, and then determine the channel coefficient based on the reference sequence and a received reference signal.

Optionally, the second terminal device may be Rel-15 UE.

Specifically, the second terminal device determines, by receiving the first reference signal and the second reference signal sent by the first terminal device and based on the first reference signal, the coefficient of a channel through which the first terminal device sends data, on the i^{th} antenna port, to the second terminal device, and determines, based on the second reference signal, the coefficient of a channel through which the first terminal device sends data, on the j^{th} antenna port, to the second terminal device, so as to estimate a channel through which data is sent on each antenna port of the first terminal device. The channel coefficient may be used to estimate a channel through which data is sent on an antenna port. In other words, the second terminal device may receive reference signals sent on all antenna ports on the sending side, and then estimate the channel of each antenna port in combination with a pilot sequence used by the received reference signal.

This application further provides an embodiment. FIG. 13 is a schematic flowchart of a reference signal transmission method 1300 according to yet another embodiment of this application. As shown in FIG. 13, the method 1300 includes the following steps.

S 1310. A first terminal device obtains a first reference signal.

S1320. The first terminal device alternately sends, on all subcarriers of a first time-frequency resource, the first reference signal by using an i^{th} antenna port and a j^{th} antenna port.

Optionally, the first reference signal is a Rel-14 reference signal.

Optionally, "alternately send" may be understood as "send on all subcarriers in a comb shape (which may be known by a person skilled in the art)".

Optionally, "alternately send" may be "send through broadcast", or may be "send to a terminal device", for example, a second terminal device.

Correspondingly, the second terminal device may perform RSRP measurement based on the first reference signal, to obtain resource usage of both the i^{th} antenna port and the j^{th} antenna port, that is, to separately learn resource usage of the i^{th} antenna port and resource usage of the j^{th} antenna port.

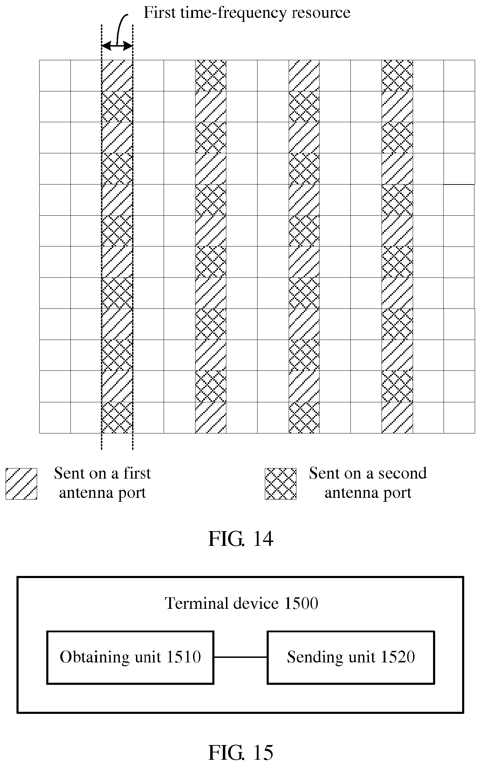

The following provides description with reference to FIG. 14. It should be understood that introduction of the example in FIG. 14 is only used for clear understanding of this embodiment of this application by a person skilled in the art, and imposes no limitation on this embodiment of this application. FIG. 14 is a schematic diagram of an example according to yet another embodiment of this application. As shown in FIG. 14, the first terminal device sends a first portion of the first reference signal on a first antenna port, and sends a second portion of the first reference signal on a second antenna port, where the first portion and the second portion are alternately sent on all subcarriers of the first time-frequency resource. It may also be understood as that, the first terminal device alternately sends, on all subcarriers of the first time-frequency resource, the first portion of the first reference signal by using the first antenna port and the second antenna port. The first reference signal is a Rel-14 reference signal. Optionally, the first portion of the first reference signal may be sent on an odd-numbered subcarrier of the first time-frequency resource, and the second portion of the first reference signal may be sent on an even-numbered subcarrier on the first time-frequency resource.

It should be understood that the "first portion" and the "second portion" of the first reference signal are introduced herein only for ease of description, and impose no limitation on this embodiment of this application.

It should be further understood that, in FIG. 14, an area other than the time-frequency resource on which the first reference signal (which includes the "first portion" and the "second portion" of the first reference signal) is sent, that is, the area represented by □ in FIG. 14, may be used to transmit data, or be used to switch a timeslot (Gap), or be used for automatic gain control (Automatic Gain Control, AGC), or be used to protect a timeslot instead of transmitting a signal, or be reserved for another purpose. This is not limited.

In this embodiment of this application, the first terminal device may alternately send, on all subcarriers of the first time-frequency resource, the first reference signal to the second terminal device by using the i^{th} antenna port and the j^{th} antenna port, so that the second terminal device may perform the RSRP measurement based on the first reference signal, to learn time-frequency resource occupancy on each antenna port.

The foregoing has described the reference signal transmission method in the embodiments of this application. The following describes a terminal device in the embodiments of this application.

FIG. 15 shows a terminal device 1500 according to an embodiment of this application. Herein, the terminal device 1500 may be understood as the foregoing first terminal device, and is configured to perform the foregoing reference signal transmission method. As shown in FIG. 15, the terminal device 1500 includes:
an obtaining unit 1510, configured to obtain a first reference signal set and a second reference signal set, where the terminal device includes n antenna ports, and n is a natural number greater than 1; and
a sending unit 1520, configured to send a first reference signal on a first time-frequency resource of an i^{th} antenna port, where the i^{th} antenna port is any one of the n antenna ports, the first time-frequency resource is included in at least one preset time-frequency resource used to send the first reference signal set and the second reference signal set, and the first reference signal is a reference signal in the first reference signal set, where
the sending unit 1520 is further configured to send a second reference signal on the first time-frequency resource of a j^{th} antenna port, where the j^{th} antenna port is one of other antenna ports than the i^{th} antenna port in the n antenna ports, the second reference signal is a reference signal in the second reference signal set, and the second reference signal is different from the first reference signal; and
the sending unit 1520 is further configured to send, on each of the n antenna ports, at least one reference signal in the first reference signal set.

Optionally, in this embodiment, the obtaining unit 1510 is specifically configured to:
determine the first reference signal set and the second reference signal set based on scheduling assignment information.

Optionally, the i^{th} antenna port is determined based on the first reference signal and the n antenna ports.

Optionally, in this embodiment, the i^{th} antenna port, the first reference signal, and the n antenna ports meet the following relationship:
m_legacy_{m_DMRSsymbol} = mod(m_DMRSsymbol, n), where
m_legacy_{m_DMRSsymbol} is the i^{th} antenna port on which the first reference signal is sent, m_DMRSsymbol is a sequence number of the first reference signal, and values of m_legacy_{m_DMRSsymbol} and m_DMRSsymbol are 0 or positive integers.

Optionally, in this embodiment, the obtaining unit is specifically configured to:
determine at least one first reference signal root sequence and at least one first cyclic shift value based on the scheduling assignment information;
determine the first reference signal set based on the at least one first reference signal root sequence and the at least one first cyclic shift value; and
determine the second reference signal set based on at least one second reference signal root sequence and at least one second cyclic shift value, where the first cyclic shift value is different from the second cyclic shift value.

Optionally, the first reference signal root sequence is the same as the second reference signal root sequence.

Optionally, in this embodiment, the first cyclic shift value or the second cyclic shift value meets the following relationship:
n_CS(m_port) = mod((n_CS_legacy + k * (m_port-m_legacy_{m_DMRSsymbol})), 8), where
n_CS(m_port) is a cyclic shift value of a h^{th} antenna port, m_port is a sequence number of the h^{th} antenna port, the h^{th} antenna port is an antenna port in the n antenna ports, and a value of m_port is 0 or a positive integer, n_CS_legacy is a cyclic shift value used to generate the first reference signal, m_legacy_{m_DMRSsymbol} is the i^{th} antenna port on which the first reference signal is sent, and k is an integer; and
when n = 2, a value of k is -4, -3, -2, -1, 1, 2, 3, or 4; or when n = 3 or 4, the value of k is -2, -1, 1, or 2.

Optionally, in an embodiment, the at least one time-frequency resource used to send the first reference signal set and the second reference signal set includes a third symbol, a sixth symbol, a ninth symbol, and a 15^{th} symbol of one subframe, and the first time-frequency resource is one of the third symbol, the sixth symbol, the ninth symbol, and the 15^{th} symbol.

Therefore, the terminal device 1500 in this embodiment of this application alternately transmits, by using all antenna ports, at least one reference signal (that is, an old pilot sequence) in the first reference signal set to a second terminal device, that is, sends the old pilot sequence on all the antenna ports, so that the second terminal device may perform RSRP measurement based on the old pilot sequence, to learn time-frequency resource occupancy on each antenna port.

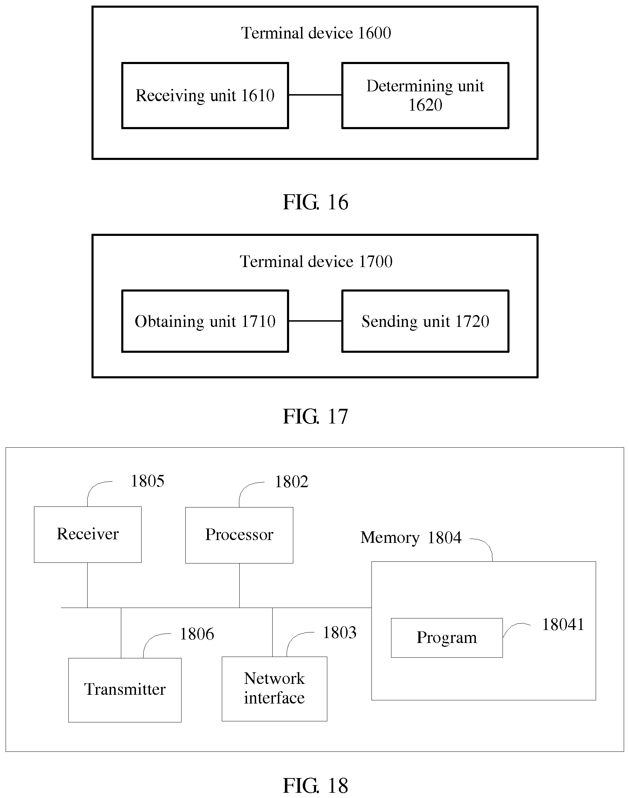

FIG. 16 shows a terminal device 1600 according to an embodiment of this application. Herein, the terminal device 1600 may be understood as the foregoing second terminal device, and is configured to perform the foregoing reference signal transmission method. As shown in FIG. 16, the terminal device 1600 includes:
a receiving unit 1610, configured to receive, on a first time-frequency resource, a first reference signal and a second reference signal sent by a first terminal device, where the first terminal device includes n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, where the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, and the second reference signal is a reference signal in a second reference signal set; and
a determining unit 1620, configured to determine a channel coefficient of the i^{th} antenna port based on the first reference signal, where
the determining unit 1620 is further configured to determine a channel coefficient of the j^{th} antenna port based on the second reference signal.

Optionally, the first reference signal set and the second reference signal set are obtained by the terminal device 1600 based on scheduling assignment information corresponding to received data.

The terminal device 1600 in this embodiment of this application determines, by receiving the first reference signal and the second reference signal sent by the first terminal device and based on the first reference signal, the coefficient of a channel through which the first terminal device sends data, on the i^{th} antenna port, to the terminal device 1600, and determines, based on the second reference signal, the coefficient of a channel through which the first terminal device sends data, on the j^{th} antenna port, to the terminal device 1600, so as to estimate a channel through which data is sent on each antenna port of the first terminal device.

FIG. 17 shows a terminal device 1700 according to an embodiment of this application. Herein, the terminal device 1700 may be understood as the foregoing first terminal device, and is configured to perform the foregoing reference signal transmission method. As shown in FIG. 17, the terminal device 1700 includes:
an obtaining unit 1710, configured to obtain a first reference signal; and
a sending unit 1720, configured to alternately send, on all subcarriers of a first time-frequency resource, the first reference signal by using an i^{th} antenna port and a j^{th} antenna port.

Optionally, the first reference signal is a Rel-14 reference signal.

Optionally, the terminal device 1700 may alternately send, on all subcarriers of the first time-frequency resource, the first reference signal to a second terminal device.

The terminal device 1700 in this embodiment of this application alternately sends, on all subcarriers of the first time-frequency resource, the first reference signal to the second terminal device by using the i^{th} antenna port and the j^{th} antenna port, so that the second terminal device may perform RSRP measurement based on the first reference signal, to learn time-frequency resource occupancy on each antenna port.

FIG. 18 shows a structure of a terminal device according to an embodiment of this application, and the terminal device includes at least one processor 1802 (for example, a CPU), at least one network interface 1803 or another communications interface, and a memory 1804. Optionally, the terminal device may further include a receiver 1805 and a transmitter 1806. The processor 1802 is configured to execute an executable module stored in the memory 1804, such as a computer program. The memory 1804 may include a high-speed random access memory RAM, or may further include a non-volatile memory (non-volatile memory), for example, at least one disk memory. A communication connection to at least one other network element is implemented by using the at least one network interface 1803 (which may be wired or wireless). The receiver 1805 and the transmitter 1806 are configured to transmit various signals or information.

Optionally, the transmitter 1806 is configured to send a first reference signal on a first time-frequency resource of an i^{th} antenna port, where the i^{th} antenna port is any one of the n antenna ports, the first time-frequency resource is included in at least one preset time-frequency resource used to send the first reference signal set and the second reference signal set, and the first reference signal is a reference signal in the first reference signal set.

The transmitter 1806 is further configured to send a second reference signal on the first time-frequency resource of a j^{th} antenna port, where the j^{th} antenna port is one of other antenna ports than the i^{th} antenna port in the n antenna ports, the second reference signal is a reference signal in the second reference signal set, and the second reference signal is different from the first reference signal.

The transmitter 1806 is further configured to send, on each of the n antenna ports, at least one reference signal in the first reference signal set.

In some implementations, the memory 1804 stores a program 18041, and the program 18041 may be executed by the processor 1802, to perform the method on a side of the first terminal device in the foregoing embodiment of this application.

It should be understood that, in this embodiment of this application, the first terminal device may perform some or all of the steps in the foregoing embodiments, and these steps or operations are merely examples; and in this embodiment of this application, other operations or variations of various operations may be further performed. In addition, the steps may be performed in an order different from that shown in the embodiments, and not all the operations in the embodiments are necessarily performed.

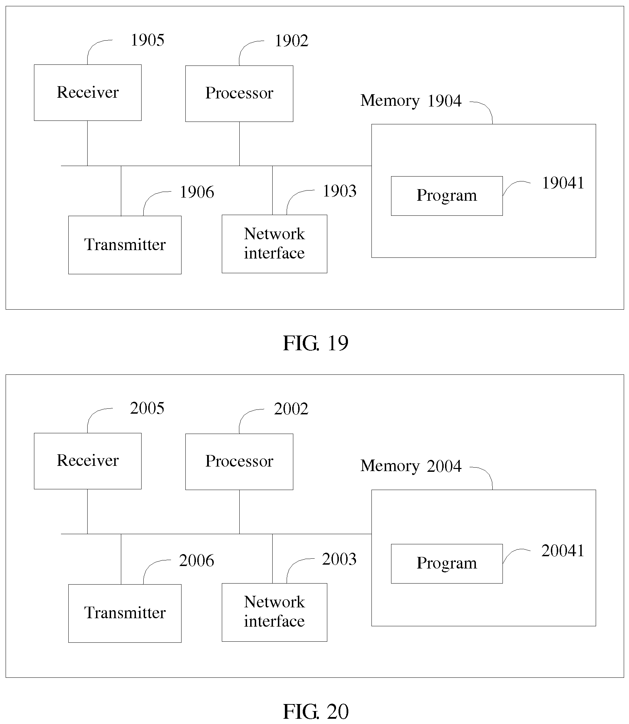

FIG. 19 shows a structure of a terminal device according to an embodiment of this application, and the terminal device includes at least one processor 1902 (for example, a CPU), at least one network interface 1903 or another communications interface, and a memory 1904. Optionally, the terminal device may further include a receiver 1905 and a transmitter 1906. The processor 1902 is configured to execute an executable module stored in the memory 1904, such as a computer program. The memory 1904 may include a high-speed random access memory RAM, or may further include a non-volatile memory (non-volatile memory), for example, at least one disk memory. A communication connection to at least one other network element is implemented by using the at least one network interface 1903 (which may be wired or wireless). The receiver 1905 and the transmitter 1906 are configured to transmit various signals or information.

Optionally, the transmitter 1906 is configured to receive, on a first time-frequency resource, a first reference signal and a second reference signal sent by a first terminal device, where the first terminal device includes n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, where the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, and the second reference signal is a reference signal in a second reference signal set.

The processor 1902 is configured to determine a channel coefficient of the i^{th} antenna port based on the first reference signal, and is further configured to determine a channel coefficient of the j^{th} antenna port based on the second reference signal.

In some implementations, the memory 1904 stores a program 19041, and the program 19041 may be executed by the processor 1902, to perform the method on a side of the second terminal device in the foregoing another embodiment of this application.

FIG. 20 shows a structure of a terminal device according to an embodiment of this application, and the terminal device includes at least one processor 2002 (for example, a CPU), at least one network interface 2003 or another communications interface, and a memory 2004. Optionally, the terminal device may further include a receiver 2005 and a transmitter 2006. The processor 2002 is configured to execute an executable module stored in the memory 2004, such as a computer program. The memory 2004 may include a high-speed random access memory RAM, or may further include a non-volatile memory (non-volatile memory), for example, at least one disk memory. A communication connection to at least one other network element is implemented by using the at least one network interface 2003 (which may be wired or wireless). The receiver 2005 and the transmitter 2006 are configured to transmit various signals or information.

Optionally, the receiver 2005 is configured to obtain a first reference signal.

The transmitter 2006 is configured to alternately send, on all subcarriers of a first time-frequency resource, the first reference signal by using an i^{th} antenna port and a j^{th} antenna port.

In some implementations, the memory 2004 stores a program 20041, and the program 20041 may be executed by the processor 2002, to perform the method on a side of the first terminal device in the foregoing another embodiment of this application.

A person of ordinary skilled in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of this application.

It may be clearly understood by a person skilled in the art that, for the purpose of convenient and brief description, for a detailed working process of the system, apparatus, and unit, reference may be made to a corresponding process in the foregoing method embodiments, and details are not described herein again.

In the several embodiments provided in the embodiments of this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in the form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of the embodiments of this application shall be subject to the protection scope of the claims.

## Claims

1. A reference signal transmission method, comprising:
obtaining (S210), by a first terminal device, a first reference signal set and a second reference signal set, wherein the first terminal device comprises n antenna ports, and n is a natural number greater than 1;
sending (S220), by the first terminal device, a first reference signal on a first time-frequency resource of an i^{th} antenna port, wherein the i^{th} antenna port is any one of the n antenna ports, the first time-frequency resource is comprised in at least one preset time-frequency resource used to send the first reference signal set and the second reference signal set, and the first reference signal is a reference signal in the first reference signal set;
sending (S230), by the first terminal device, a second reference signal on the first time-frequency resource of a j^{th} antenna port, wherein the j^{th} antenna port is one of other antenna ports than the i^{th} antenna port in the n antenna ports, the second reference signal is a reference signal in the second reference signal set, and the second reference signal is different from the first reference signal; and
sending (S240), by the first terminal device on each of the n antenna ports, at least one reference signal in the first reference signal set;
wherein the first reference signal is an LTE-A Rel-14, i.e. old pilot sequence and the second reference signal is different from the LTE-A Rel-14 pilot sequence.

2. The method according to claim 1, wherein the obtaining, by a first terminal device, a first reference signal set and a second reference signal set comprises:
determining, by the first terminal device, the first reference signal set and the second reference signal set based on scheduling assignment information.

3. The method according to claim 1 or 2, wherein the i^{th} antenna port is determined based on the first reference signal and the n antenna ports.

4. The method according to any one of claims 1 to 3, wherein the i^{th} antenna port, the first reference signal, and the n antenna ports meet the following relationship:
m_legacy_{m_DMRSsymbol} = mod(m_DMRSsymbol, n), wherein
m_legacy_{m_DMRSsymbol} is the i^{th} antenna port on which the first reference signal is sent, m_DMRSsymbol is a sequence number of the first reference signal, and values of m_legacy_{m_DMRSsymbol} and m_DMRSsymbol are 0 or positive integers.

5. The method according to any one of claims 2 to 4, wherein the determining, by the first terminal device, the first reference signal set and the second reference signal set based on scheduling assignment information comprises:
determining, by the first terminal device, at least one first reference signal root sequence and at least one first cyclic shift value based on the scheduling assignment information;
determining, by the first terminal device, the first reference signal set based on the at least one first reference signal root sequence and the at least one first cyclic shift value; and
determining, by the first terminal device, the second reference signal set based on at least one second reference signal root sequence and at least one second cyclic shift value, wherein the first cyclic shift value is different from the second cyclic shift value.

6. The method according to claim 5, wherein the first reference signal root sequence is the same as the second reference signal root sequence.

7. The method according to claim 5 or 6, wherein the first cyclic shift value or the second cyclic shift value meets the following relationship:
n_CS(m_port) = mod((n_CS_legacy + k * (m_port - m_legacy_{m_DMRSsymbol})), 8), wherein
n_CS(m_port) is a cyclic shift value of a h^{th} antenna port, m_port is a sequence number of the h^{th} antenna port, the h^{th} antenna port is an antenna port in the n antenna ports, and a value of m_port is 0 or a positive integer, n_CS_legacy is a cyclic shift value used to generate the first reference signal, m_legacy_{m_DMRSsymbol} is the i^{th} antenna port on which the first reference signal is sent, and k is an integer; and
when n = 2, a value of k is -4, -3, -2, -1, 1, 2, 3, or 4; or when n = 3 or 4, the value of k is -2, -1, 1, or 2.

8. The method according to any one of claims 1 to 7, wherein the at least one time-frequency resource used to send the first reference signal set and the second reference signal set comprises a third symbol, a sixth symbol, a ninth symbol, and a 12^{th} symbol of one subframe, and the first time-frequency resource is one of the third symbol, the sixth symbol, the ninth symbol, and the 12^{th} symbol.

9. A reference signal transmission method, comprising:
receiving (S1210), by a second terminal device on a first time-frequency resource, a first reference signal and a second reference signal sent by a first terminal device, wherein the first terminal device comprises n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, wherein the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, and the second reference signal is a reference signal in a second reference signal set;
wherein at least one reference signal in the first reference signal set is sent by the first terminal device on each of the n antenna ports;
determining (S1220), by the second terminal device, a channel coefficient of the i^{th} antenna port based on the first reference signal; and
determining (S1230), by the second terminal device, a channel coefficient of the j^{th} antenna port based on the second reference signal;
wherein the first reference signal is an LTE-A Rel-14, i.e. old pilot sequence and the second reference signal is different from the LTE-A Rel-14 pilot sequence.

10. The method according to claim 9, wherein the first reference signal set and the second reference signal set are obtained by the terminal device based on scheduling assignment information corresponding to received data.

11. A terminal device (1500), comprising:
an obtaining unit (1510), configured to obtain a first reference signal set and a second reference signal set, wherein the terminal device comprises n antenna ports, and n is a natural number greater than 1; and
a sending unit (1520), configured to send a first reference signal on a first time-frequency resource of an i^{th} antenna port, wherein the i^{th} antenna port is any one of the n antenna ports, the first time-frequency resource is comprised in at least one preset time-frequency resource used to send the first reference signal set and the second reference signal set, and the first reference signal is a reference signal in the first reference signal set, wherein
the sending unit is further configured to send a second reference signal on the first time-frequency resource of a j^{th} antenna port, wherein the j^{th} antenna port is one of other antenna ports than the i^{th} antenna port in the n antenna ports, the second reference signal is a reference signal in the second reference signal set, and the second reference signal is different from the first reference signal; and
the sending unit is further configured to send, on each of the n antenna ports, at least one reference signal in the first reference signal set;
wherein the first reference signal is an LTE-A Rel-14, i.e. old pilot sequence and the second reference signal is different from the LTE-A Rel-14 pilot sequence.

12. A terminal device according to claim 11 configured, when in use, to perform the method of any of claims 1 to 8.

13. A terminal device, comprising:
a receiving unit, configured to receive, on a first time-frequency resource, a first reference signal and a second reference signal sent by a first terminal device, wherein the first terminal device comprises n antenna ports, n is a natural number greater than 1, the first reference signal is sent by the first terminal device on the first time-frequency resource of an i^{th} antenna port, and the second reference signal is sent by the first terminal device on the first time-frequency resource of a j^{th} antenna port, wherein the i^{th} antenna port is any one of the n antenna ports, the j^{th} antenna port is one of other antenna ports than the i^{th} antenna port in the n antenna ports, the second reference signal is different from the first reference signal, the first reference signal is a reference signal in a first reference signal set, the second reference signal is a reference signal in a second reference signal set, and the first reference signal set and the second reference signal set are obtained by the first terminal device;
wherein at least one reference signal in the first reference signal set is sent by the first terminal device on each of the n antenna ports; and
a determining unit (, configured to determine a channel coefficient of the i^{th} antenna port based on the first reference signal, wherein
the determining unit is further configured to determine a channel coefficient of the j^{th} antenna port based on the second reference signal;
wherein the first reference signal is an LTE-A Rel-14, i.e. old pilot sequence and the second reference signal is different from the LTE-A Rel-14 pilot sequence.

14. A terminal device according to claim 13 configured, when in use, to perform the method of claim 9 or claim 10.

## Patentansprüche

1. Verfahren zur Übertragung von Referenzsignalen, umfassend:
Erlangen (S210) eines ersten Referenzsignalsatzes und eines zweiten Referenzsignalsatzes durch ein erstes Endgerät, wobei das erste Endgerät n Antennenanschlüsse umfasst und n eine natürliche Zahl größer als 1 ist;
Senden (S220) eines ersten Referenzsignals auf einer ersten Zeit-Frequenz-Ressource eines i-ten Antennenanschlusses durch das erste Endgerät, wobei es sich bei dem i-ten Antennenanschluss um einen beliebigen der n Antennenanschlüsse handelt, wobei die erste Zeit-Frequenz-Ressource aus mindestens einer voreingestellten Zeit-Frequenz-Ressource besteht, die zum Senden des ersten Referenzsignalsatzes und des zweiten Referenzsignalsatzes verwendet wird, und wobei es sich bei dem ersten Referenzsignal um ein Referenzsignal in dem ersten Referenzsignalsatz handelt;
Senden (S230) eines zweiten Referenzsignals auf der ersten Zeit-Frequenz-Ressource eines j-ten Antennenanschlusses durch das erste Endgerät, wobei es sich bei dem j-ten Antennenanschluss um einen anderen der Antennenanschlüsse als den i-ten Antennenanschluss unter den n Antennenanschlüssen handelt, wobei es sich bei dem zweiten Referenzsignal um ein Referenzsignal in dem zweiten Referenzsignalsatz handelt, und wobei sich das zweite Referenzsignal von dem ersten Referenzsignal unterscheidet; und
Senden (S240) mindestens eines Referenzsignals in dem ersten Referenzsignalsatz durch das erste Endgerät an jedem der n Antennenanschlüsse;
wobei das erste Referenzsignal ein LTE-A Rel-14 ist, d. h. eine alte Pilotsequenz, und sich das zweite Referenzsignal von der LTE-A Rel-14-Pilotsequenz unterscheidet.

2. Verfahren nach Anspruch 1, wobei das Erlangen eines ersten Referenzsignalsatzes und eines zweiten Referenzsignalsatzes durch ein erstes Endgerät Folgendes umfasst:
Bestimmen des ersten Referenzsignalsatzes und des zweiten Referenzsignalsatzes durch das erste Endgerät basierend auf Planungszuweisungsinformationen.

3. Verfahren nach Anspruch 1 oder 2, wobei der i-te Antennenanschluss basierend auf dem ersten Referenzsignal und den n Antennenanschlüssen bestimmt wird.

4. Verfahren nach einem der Ansprüche 1 bis 3, wobei der i-te Antennenanschluss, das erste Referenzsignal und die n Antennenanschlüsse die folgende Beziehung erfüllen:
m_legacy_{m_DMRSsymbol} = mod (m_DMRSsymbol, n), wobei
es sich bei m-legacy_{m_DMRssymbol} um den i-ten Antennenanschluss handelt, an dem das erste Referenzsignal gesendet wird, es sich bei m_DMRSsymbol um eine Sequenznummer des ersten Referenzsignals handelt und Werte von m_legacy_{m_DMRSsymbol} und m_DMRSsymbol 0 oder positive ganze Zahlen sind.

5. Verfahren nach einem der Ansprüche 2 bis 4, wobei das Bestimmen des ersten Referenzsignalsatzes und des zweiten Referenzsignalsatzes durch das erste Endgerät basierend auf Planungszuweisungsinformationen Folgendes umfasst:
Bestimmen mindestens einer ersten Referenzsignal-Wurzelsequenz und mindestens eines ersten zyklischen Verschiebungswertes durch das erste Endgerät basierend auf den Planungszuweisungsinformationen;
Bestimmen des ersten Referenzsignalsatzes durch das erste Endgerät basierend auf der mindestens einen ersten Referenzsignal-Wurzelsequenz und dem mindestens einen ersten zyklischen Verschiebungswert; und
Bestimmen des zweiten Referenzsignalsatzes durch das erste Endgerät basierend auf mindestens einer zweiten Referenzsignal-Wurzelsequenz und mindestens einem zweiten zyklischen Verschiebungswert, wobei sich der erste zyklische Verschiebungswert von dem zweiten zyklischen Verschiebungswert unterscheidet.

6. Verfahren nach Anspruch 5, wobei die erste Referenzsignal-Wurzelsequenz dieselbe ist wie die zweite Referenzsignal-Wurzelsequenz.

7. Verfahren nach Anspruch 5 oder 6, wobei der erste zyklische Verschiebungswert oder der zweite zyklische Verschiebungswert die folgende Beziehung erfüllt:
n_CS(m_port) = mod((n_CS_legacy + k * (m_port - m_legacy_{m_ DMRSsymbol})), 8), Wobei
n_CS (m_port) ein zyklischer Verschiebungswert eines h-ten Antennenanschlusses ist, m_port eine Sequenznummer des h-ten Antennenanschlusses ist, es sich bei dem h-ten Antennenanschluss um einen Antennenanschluss unter den n Antennenanschlüssen handelt und ein Wert von m_port 0 oder eine positive ganze Zahl ist, wobei n_CS_legacy ein zyklischer Verschiebungswert ist, der zum Erzeugen des ersten Referenzsignals verwendet wird, m_legacy_{m_DMRSsymbol} der i-te Antennenanschluss ist, an dem das erste Referenzsignal gesendet wird, und k eine ganze Zahl ist; und
wenn n = 2, ein Wert von k -4, -3, -2, -1, 1, 2, 3 oder 4 ist; oder wenn n = 3 oder 4, der Wert von k -2, -1, 1 oder 2 ist.

8. Verfahren nach einem der Ansprüche 1 bis 7, wobei die mindestens eine Zeit-Frequenz-Ressource, die zum Senden des ersten Referenzsignalsatzes und des zweiten Referenzsignalsatzes verwendet wird, ein drittes Symbol, ein sechstes Symbol, ein neuntes Symbol und ein 12. Symbol eines Unterrahmens umfasst, und wobei die erste Zeit-Frequenz-Ressource eines von dem dritten Symbol, dem sechsten Symbol, dem neunten Symbol und dem 12. Symbol ist.

9. Verfahren zur Übertragung von Referenzsignalen, umfassend:
Empfangen (S1210), durch ein zweites Endgerät auf einer ersten Zeit-Frequenz-Ressource, eines ersten Referenzsignals und eines zweiten Referenzsignals, die durch ein erstes Endgerät gesendet werden, wobei das erste Endgerät n Antennenanschlüsse umfasst, wobei n eine natürliche Zahl größer als 1 ist, wobei das erste Referenzsignal durch das erste Endgerät auf der ersten Zeit-Frequenz-Ressource eines i-ten Antennenanschlusses gesendet wird und das zweite Referenzsignal durch das erste Endgerät auf der ersten Zeit-Frequenz-Ressource eines j-ten Antennenanschlusses gesendet wird, wobei es sich bei dem i-ten Antennenanschluss um einen beliebigen der n Antennenanschlüsse handelt, es sich bei dem j-ten Antennenanschluss um einen anderen der Antennenanschlüsse als den i-ten Antennenanschluss unter den n Antennenanschlüssen handelt, wobei sich das zweite Referenzsignal von dem ersten Referenzsignal unterscheidet, wobei es sich bei dem ersten Referenzsignal um ein Referenzsignal in einem ersten Referenzsignalsatz handelt und es sich bei dem zweiten Referenzsignal um ein Referenzsignal in einem zweiten Referenzsignalsatz handelt;
wobei mindestens ein Referenzsignal in dem ersten Referenzsignalsatz durch das erste Endgerät an jedem der n Antennenanschlüsse gesendet wird;
Bestimmen (S1220) eines Kanalkoeffizienten des i-ten Antennenanschlusses durch das zweite Endgerät basierend auf dem ersten Referenzsignal; und
Bestimmen (S1230) eines Kanalkoeffizienten des j-ten Antennenanschlusses durch das zweite Endgerät basierend auf dem zweiten Referenzsignal;
wobei das erste Referenzsignal ein LTE-A Rel-14 ist, d. h. eine alte Pilotsequenz, und sich das zweite Referenzsignal von der LTE-A Rel-14-Pilotsequenz unterscheidet.

10. Verfahren nach Anspruch 9, wobei der erste Referenzsignalsatz und der zweite Referenzsignalsatz durch das Endgerät basierend auf Planungszuweisungsinformationen, die empfangenen Daten entsprechen, erlangt werden.

11. Endgerät (1500), umfassend:
eine Erlangungseinheit (1510), die dazu konfiguriert ist, einen ersten Referenzsignalsatz und einen zweiten Referenzsignalsatz zu erlangen, wobei das Endgerät n Antennenanschlüsse umfasst und n eine natürliche Zahl größer als ist 1; und
eine Sendeeinheit (1520), die dazu konfiguriert ist, ein erstes Referenzsignal auf einer ersten Zeit-Frequenz-Ressource eines i-ten Antennenanschlusses zu senden, wobei es sich bei dem i-ten Antennenanschluss um einen beliebigen der n Antennenanschlüsse handelt, wobei die erste Zeit-Frequenz-Ressource aus mindestens einer voreingestellten Zeit-Frequenz-Ressource besteht, die zum Senden des ersten Referenzsignalsatzes und des zweiten Referenzsignalsatzes verwendet wird, und wobei es sich bei dem ersten Referenzsignal um ein Referenzsignal in dem ersten Referenzsignalsatz handelt, wobei
die Sendeeinheit ferner dazu konfiguriert ist, ein zweites Referenzsignal auf der ersten Zeit-Frequenz-Ressource eines j-ten Antennenanschlusses zu senden, wobei es sich bei dem j-ten Antennenanschluss um einen anderen der Antennenanschlüsse als den i-ten Antennenanschluss unter den n Antennenanschlüssen handelt, wobei es sich bei dem zweiten Referenzsignal um ein Referenzsignal in dem zweiten Referenzsignalsatz handelt, und wobei sich das zweite Referenzsignal von dem ersten Referenzsignal unterscheidet; und
die Sendeeinheit ferner dazu konfiguriert ist, an jedem der n Antennenanschlüsse mindestens ein Referenzsignal in dem ersten Referenzsignalsatz zu senden;
wobei das erste Referenzsignal ein LTE-A Rel-14 ist, d. h. eine alte Pilotsequenz, und sich das zweite Referenzsignal von der LTE-A Rel-14-Pilotsequenz unterscheidet.

12. Endgerät nach Anspruch 11, das bei Verwendung dazu konfiguriert ist, das Verfahren nach einem der Ansprüche 1 bis 8 durchzuführen.

13. Endgerät, umfassend:
eine Empfangseinheit, die dazu konfiguriert ist, auf einer ersten Zeit-Frequenz-Ressource ein ersten Referenzsignal und ein zweites Referenzsignal zu empfangen, die durch ein erstes Endgerät gesendet werden, wobei das erste Endgerät n Antennenanschlüsse umfasst, wobei n eine natürliche Zahl größer als 1 ist, wobei das erste Referenzsignal durch das erste Endgerät auf der ersten Zeit-Frequenz-Ressource eines i-ten Antennenanschlusses gesendet wird und das zweite Referenzsignal durch das erste Endgerät auf der ersten Zeit-Frequenz-Ressource eines j-ten Antennenanschlusses gesendet wird, wobei es sich bei dem i-ten Antennenanschluss um einen beliebigen der n Antennenanschlüsse handelt, es sich bei dem j-ten Antennenanschluss um einen anderen der Antennenanschlüsse als den i-ten Antennenanschluss unter den n Antennenanschlüssen handelt, wobei sich das zweite Referenzsignal von dem ersten Referenzsignal unterscheidet, wobei es sich bei dem ersten Referenzsignal um ein Referenzsignal in einem ersten Referenzsignalsatz handelt, es sich bei dem zweiten Referenzsignal um ein Referenzsignal in einem zweiten Referenzsignalsatz handelt und der erste Referenzsignalsatz und der zweite Referenzsignalsatz durch das erste Endgerät erlangt werden;
wobei mindestens ein Referenzsignal in dem ersten Referenzsignalsatz durch das erste Endgerät an jedem der n Antennenanschlüsse gesendet wird; und
eine Bestimmungseinheit, die dazu konfiguriert ist, einen Kanalkoeffizienten des i-ten Antennenanschlusses basierend auf dem ersten Referenzsignal zu bestimmen, wobei
die Bestimmungseinheit ferner dazu konfiguriert ist, einen Kanalkoeffizienten des j-ten Antennenanschlusses basierend auf dem zweiten Referenzsignal zu bestimmen;
wobei das erste Referenzsignal ein LTE-A Rel-14 ist, d. h. eine alte Pilotsequenz, und sich das zweite Referenzsignal von der LTE-A Rel-14-Pilotsequenz unterscheidet.

14. Endgerät nach Anspruch 13, das bei Verwendung dazu konfiguriert ist, das Verfahren nach Anspruch 9 oder Anspruch 10 durchzuführen.

## Revendications

1. Procédé d'émission de signal de référence, comprenant :
l'obtention (S210), par un premier dispositif terminal, d'un premier ensemble de signaux de référence et d'un second ensemble de signaux de référence, dans lequel le premier dispositif terminal comprend n bornes d'antenne, et n est un entier naturel supérieur à 1 ;
l'envoi (S220), par le premier dispositif terminal, d'un premier signal de référence sur une première ressource de fréquence temporelle d'une i^{ème} borne d'antenne, dans lequel la i^{ème} borne d'antenne est l'une quelconque des n bornes d'antenne, la première ressource de fréquence temporelle est comprise dans au moins une ressource de fréquence temporelle prédéfinie utilisée pour envoyer le premier ensemble de signaux de référence et le second ensemble de signaux de référence, et le premier signal de référence est un signal de référence dans le premier ensemble de signaux de référence ;
l'envoi (S230), par le premier dispositif terminal, d'un second signal de référence sur la première ressource de fréquence temporelle d'une j^{ème} borne d'antenne, dans lequel la j^{ème} borne d'antenne est l'une des autres bornes d'antenne que la i^{ème} borne d'antenne dans les n bornes d'antenne, le second signal de référence est un signal de référence dans le second ensemble de signaux de référence, et le second signal de référence est différent du premier signal de référence ; et
l'envoi (S240), par le premier dispositif terminal sur chacune des n bornes d'antenne, d'au moins un signal de référence dans le premier ensemble de signaux de référence ;
dans lequel le premier signal de référence est un LTE-A Rel-14, c'est-à-dire une ancienne séquence pilote et le second signal de référence est différent de la séquence pilote LTE-A Rel-14.

2. Procédé selon la revendication 1, dans lequel l'obtention, par un premier dispositif terminal, d'un premier ensemble de signaux de référence et d'un second ensemble de signaux de référence comprend :
la détermination, par le premier dispositif terminal, du premier ensemble de signaux de référence et du second ensemble de signaux de référence sur la base d'informations d'affectation de planification.

3. Procédé selon la revendication 1 ou 2, dans lequel la i^{ème} borne d'antenne est déterminée sur la base du premier signal de référence et des n bornes d'antenne.

4. Procédé selon l'une quelconque des revendications 1 à 3, dans lequel la i^{ème} borne d'antenne, le premier signal de référence et les n bornes d'antenne répondent à la relation suivante :
m_legacy_{m_DMRSsymbol}= mod (m_DMRSsymbol, n), où
m_legacy_{m_DMRSsymbol} est la i^{ème} borne d'antenne sur laquelle le premier signal de référence est envoyé, m_DMRSsymbol est un numéro de séquence du premier signal de référence, et les valeurs de m_legacy_{m_DMRSsymbol} et de m_DMRSsymbol sont de 0 ou sont des entiers positifs.

5. Procédé selon l'une quelconque des revendications 2 à 4, dans lequel la détermination, par le premier dispositif terminal, du premier ensemble de signaux de référence et du second ensemble de signaux de référence sur la base des informations d'affectation de planification comprend :
la détermination, par le premier dispositif terminal, d'au moins une première séquence racine de signal de référence et d'au moins une première valeur de décalage cyclique sur la base des informations d'affectation de planification ;
la détermination, par le premier dispositif terminal, du premier ensemble de signaux de référence sur la base de l'au moins une première séquence racine de signal de référence et de l'au moins une première valeur de décalage cyclique ; et
la détermination, par le premier dispositif terminal, du second ensemble de signaux de référence sur la base d'au moins une seconde séquence racine de signal de référence et d'au moins une seconde valeur de décalage cyclique, dans lequel la première valeur de décalage cyclique est différente de la seconde valeur de décalage cyclique.

6. Procédé selon la revendication 5, dans lequel la première séquence racine de signal de référence est la même que la seconde séquence racine de signal de référence.

7. Procédé selon la revendication 5 ou 6, dans lequel la première valeur de décalage cyclique ou la seconde valeur de décalage cyclique répond à la relation suivante :
n_CS(m_port) = mod((n_CS_legacy + k * (m_port - m_legacyₘ__{DMRSsymbol})), 8), où
n_CS(m_port) est une valeur de décalage cyclique d'une h^{ème} borne d'antenne, m_port est un numéro de séquence de la h^{ème} borne d'antenne, la h^{ème} borne d'antenne est une borne d'antenne dans les n bornes d'antenne, et une valeur de m_port est de 0 ou est un entier positif, n_CS_legacy est une valeur de décalage cyclique utilisée pour générer le premier signal de référence, m_legacy_{m_DMRSsymbol} est la i^{ème} borne d'antenne sur laquelle le premier signal de référence est envoyé, et k est un entier ; et
quand n = 2, une valeur de k est de -4, -3, -2, -1, 1, 2, 3 ou 4 ; ou quand n = 3 ou 4, la valeur de k est -2, -1, 1 ou 2.

8. Procédé selon l'une quelconque des revendications 1 à 7, dans lequel l'au moins une ressource de fréquence temporelle utilisée pour envoyer le premier ensemble de signaux de référence et le second ensemble de signaux de référence comprend un troisième symbole, un sixième symbole, un neuvième symbole et un 12^{ème} symbole d'une sous-trame, et la première ressource de fréquence temporelle est l'un du troisième symbole, du sixième symbole, du neuvième symbole et du 12^{ème} symbole.

9. Procédé d'émission de signal de référence, comprenant :
la réception (S1210), par un second dispositif terminal sur une première ressource de fréquence temporelle, d'un premier signal de référence et d'un second signal de référence envoyé par un premier dispositif terminal, dans lequel le premier dispositif terminal comprend n bornes d'antenne, n est un nombre naturel supérieur à 1, le premier signal de référence est envoyé par le premier dispositif terminal sur la première ressource de fréquence temporelle d'une i^{ème} borne d'antenne, et le second signal de référence est envoyé par le premier dispositif terminal sur la première ressource de fréquence temporelle d'une j^{ème} borne d'antenne, dans lequel la i^{ème} borne d'antenne est l'une quelconque des n bornes d'antenne, la j^{ème} borne d'antenne est l'une des autres bornes d'antenne que la i^{ème} borne d'antenne dans les n ports d'antenne, le second signal de référence est différent du premier signal de référence, le premier signal de référence est un signal de référence dans un premier ensemble de signaux de référence, et le second signal de référence est un signal de référence dans un second ensemble de signaux de référence ;
dans lequel au moins un signal de référence dans le premier ensemble de signaux de référence est envoyé par le premier dispositif terminal sur chacune des n bornes d'antenne ;
la détermination (S1220), par le second dispositif terminal, d'un coefficient de canal de la i^{ème} borne d'antenne sur la base du premier signal de référence ; et
la détermination (S1230), par le second dispositif terminal, d'un coefficient de canal de la j^{ème} borne d'antenne sur la base du second signal de référence ;
dans lequel le premier signal de référence est un LTE-A Rel-14, c'est-à-dire une ancienne séquence pilote et le second signal de référence est différent de la séquence pilote LTE-A Rel-14.

10. Procédé selon la revendication 9, dans lequel le premier ensemble de signaux de référence et le second ensemble de signaux de référence sont obtenus par le dispositif terminal sur la base d'informations d'affectation de planification correspondant aux données reçues.

11. Dispositif terminal (1500), comprenant :
une unité d'obtention (1510), configurée pour obtenir un premier ensemble de signaux de référence et un second ensemble de signaux de référence, dans lequel le dispositif terminal comprend n bornes d'antenne, et n est un nombre naturel supérieur à 1 ; et
une unité d'envoi (1520), configurée pour envoyer un premier signal de référence sur une première ressource de fréquence temporelle d'une i^{ème} borne d'antenne, dans lequel la i^{ème} borne d'antenne est l'une quelconque des n bornes d'antenne, la première ressource de fréquence temporelle est comprise dans au moins une ressource de fréquence temporelle prédéfinie utilisée pour envoyer le premier ensemble de signaux de référence et le second ensemble de signaux de référence, et le premier signal de référence est un signal de référence dans le premier ensemble de signaux de référence, dans lequel
l'unité d'envoi est en outre configurée pour envoyer un second signal de référence sur la première ressource de fréquence temporelle d'une j^{ème} borne d'antenne, dans lequel la j^{ème} borne d'antenne est l'une des autres bornes d'antenne que la i^{ème} borne d'antenne dans les n bornes d'antenne, le second signal de référence est un signal de référence dans le second ensemble de signaux de référence, et le second signal de référence est différent du premier signal de référence ; et
l'unité d'envoi est en outre configurée pour envoyer, sur chacune des n bornes d'antenne, au moins un signal de référence dans le premier ensemble de signaux de référence ;
dans lequel le premier signal de référence est un LTE-A Rel-14, c'est-à-dire une ancienne séquence pilote et le second signal de référence est différent de la séquence pilote LTE-A Rel-14.

12. Dispositif terminal selon la revendication 11 configuré, en utilisation, pour exécuter le procédé de l'une quelconque des revendications 1 à 8.

13. Dispositif terminal, comprenant :
une unité de réception, configurée pour recevoir, sur une première ressource de fréquence temporelle, un premier signal de référence et un second signal de référence envoyé par un premier dispositif terminal, dans lequel le premier dispositif terminal comprend n bornes d'antenne, n est un nombre naturel supérieur à 1, le premier signal de référence est envoyé par le premier dispositif terminal sur la première ressource de fréquence temporelle d'une i^{ème} borne d'antenne, et le second signal de référence est envoyé par le premier dispositif terminal sur la première ressource de fréquence temporelle d'une j^{ème} borne d'antenne, dans lequel la i^{ème} borne d'antenne est l'une quelconque des n bornes d'antenne, la j^{ème} borne d'antenne est l'une des autres bornes d'antenne que la i^{ème} borne d'antenne dans les n ports d'antenne, le second signal de référence est différent du premier signal de référence, le premier signal de référence est un signal de référence dans un premier ensemble de signaux de référence, le second signal de référence est un signal de référence dans un second ensemble de signaux de référence, et le premier ensemble de signaux de référence et le second ensemble de signaux de référence sont obtenus grâce au premier dispositif terminal ;
dans lequel au moins un signal de référence dans le premier ensemble de signaux de référence est envoyé par le premier dispositif terminal sur chacune des n bornes d'antenne ; et
une unité de détermination, configurée pour déterminer un coefficient de canal de la i^{ème} borne d'antenne sur la base du premier signal de référence, dans lequel
l'unité de détermination est en outre configurée pour déterminer un coefficient de canal de la j^{ème} borne d'antenne sur la base du second signal de référence ;
dans lequel le premier signal de référence est un LTE-A Rel-14, c'est-à-dire une ancienne séquence pilote et le second signal de référence est différent de la séquence pilote LTE-A Rel-14.

14. Dispositif terminal selon la revendication 13 configuré, en utilisation, pour exécuter le procédé de la revendication 9 ou de la revendication 10.
